(19) Europäisches Patentamt / European Patent Office / Office européen des brevets

(11) **EP 4 631 996 A1**

(12) **EUROPEAN PATENT APPLICATION**
published in accordance with Art. 153(4) EPC

(43) Date of publication:
**15.10.2025 Bulletin 2025/42**

(21) Application number: **23900362.7**

(22) Date of filing: **06.11.2023**

(51) International Patent Classification (IPC):
*C08G 79/14* (2006.01)    *C08G 18/40* (2006.01)
*C08G 63/00* (2006.01)    *C08G 69/26* (2006.01)
*C08L 101/16* (2006.01)

(52) Cooperative Patent Classification (CPC):
**C08G 18/40; C08G 63/00; C08G 69/26; C08G 79/14; C08L 101/16**

(86) International application number:
**PCT/JP2023/039851**

(87) International publication number:
**WO 2024/122240 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.12.2022 JP 2022194941**

(71) Applicant: **Nisshinbo Holdings Inc.**
**Tokyo 103-8650 (JP)**

(72) Inventors:
• **UEMURA, Naohiro**
  **Chiba-city, Chiba 267-0056 (JP)**
• **SASAKI, Kenta**
  **Chiba-city, Chiba 267-0056 (JP)**
• **HAYAKAWA, Kazutoshi**
  **Chiba-city, Chiba 267-0056 (JP)**
• **HASHIBA, Toshifumi**
  **Chiba-city, Chiba 267-0056 (JP)**

(74) Representative: **Mewburn Ellis LLP**
**Aurora Building**
**Counterslip**
**Bristol BS1 6BX (GB)**

(54) **MARINE BIODEGRADABLE POLYMER COMPOUND, METHOD FOR PRODUCING SAME, AND MARINE BIODEGRADABLE RESIN COMPOSITION**

(57)    Provided is a marine biodegradable polymer compound including, as essential units: (A) a structural unit A derived from a marine biodegradable linking agent which is a compound including two or more reactive groups X in the molecule and having, in the main chain, a structure which includes two or more organic anions having a predefined molecular weight and in which the organic anions are bound by an ionic bond formed by a metal cation having a valence of two or more; and (B1) a structural unit B1 derived from a compound having, in the molecule, two or more reactive groups Y that react with the reactive groups X or (B2) a structural unit B2 derived from a cyclic compound which can undergo ring opening polymerization and in which the reactive groups Y that reacts with the reactive groups X are generated in the molecule through ring-opening. When the structural unit B1 is included, the marine biodegradable polymer compound further includes (C) a structural unit C derived from a compound that is other than the marine biodegradable linking agent and that includes two or more of the reactive groups X in the molecule.

EP 4 631 996 A1

**Description**

TECHNICAL FIELD

The present invention relates to a marine biodegradable polymer compound, a method for producing the same, and a marine biodegradable resin composition.

BACKGROUND ART

Environmental contamination by microplastics (marine contamination) and the harmful effects of microplastics on ecosystems have become a problem in recent years, and so a variety of efforts to reduce their environmental impact have been launched. Noteworthy among these efforts is the development and widespread adoption of biodegradable resins.

Ordinary biodegradable resins exhibit high biodegradability in environments such as soils and sludge where there is an abundance of microorganisms that carry out degradation. However, degradation does not readily take place in environments such as the oceans where the concentration of microorganisms is extremely low (Non-Patent Document 1). Even with resins such as polycaprolactone (PCL) and polyhydroxyalkanoates (PHA) for which biodegradability in the oceans has been reported, the rate of degradation has been found to differ widely depending on the type of seawater and is reportedly affected by a variety of factors, such as the presence/absence and cell count of plastic-degrading bacteria in the seawater, and the salinity, pH, temperature, dissolved oxygen concentration and dissolved organic carbon level of the water (Non-Patent Document 2).

Starch-based resins too are being put to practical use and marketed as biodegradable resins, but materials made solely of starch are highly inferior in terms of their physical properties and so starch-based resins are almost always used in the form of mixed compositions with polyester-based resins such as polybutylene adipate/terephthalate (PBAT) or polylactate (PLA) that do not readily biodegrade in the ocean. Hence, such materials, in spite of being starch-based resins, have a greatly diminished marine biodegradability.

In light of such circumstances, there exists a desire for the development of materials which reliably degrade in any type of seawater while maintaining their physical properties, and also materials which function as degradation promoters for plastics that do not readily biodegrade in seawater and thus reduce the environmental impact of such plastics.

PRIOR ART DOCUMENTS

NON-PATENT DOCUMENTS

Non-Patent Document 1: Takada, H.: "Current status of microplastics contamination --International trends and countermeasures," Haikibutsu Shigen Junkan Gakkaishi, Vol. 29, No. 4, pp. 261-269 (2018)
Non-Patent Document 2: Ebisui, A., et al.: "Degradation of biodegradable plastics in seawater," Suisan Kogaku, Vol. 40, No. 2, pp. 143-149 (2003)

SUMMARY OF INVENTION

TECHNICAL PROBLEM

The present invention was arrived at in light of the above circumstances. The object of this invention is to provide a marine biodegradable polymer compound which promotes the degradation of plastics in the ocean and thus accelerates biodegradation, a method for preparing such a polymer compound, and a marine biodegradable resin composition containing the polymer compound.

SOLUTION TO PROBLEM

The inventors have conducted intensive investigations in order to achieve the above objects. As a result, they have discovered that, in a marine biodegradable polymer compound which includes as essential units:

(A) a structural unit A derived from a marine biodegradable linking agent which is a compound that includes on the molecule two or more reactive groups X and has, on a main chain, a structure which includes two or more organic anions having molecular weights of from 100 to 10,000 and in which the organic anions are bound by ionic bonds with a metal cation having a valence of two or more, and

(B1) a structural unit B1 derived from a compound having on the molecule two or more reactive groups Y that react with the reactive groups X or (B2) a structural unit B2 derived from a ring-opening polymerizable cyclic compound in which reactive groups Y that react with the reactive groups X form on the molecule due to ring opening;

and which, when including structural unit B1, additionally includes:

(C) a structural unit C derived from a compound, other than the marine biodegradable linking agent, which includes on the molecule two or more reactive groups X,

molecules of the polymer compound are cleaved and marine degradation is accelerated by ion exchange with monovalent cations such as sodium and potassium in seawater. The marine biodegradable linking agent (A) is used as a linking agent. In the polymer compound obtained using marine biodegradable linking agent (A) as a starting material, cleavage sites where ionic bonds serve as triggers can be introduced onto the main chain, enabling marine biodegradability to be imparted.

The inventors have also found that by using such a marine biodegradable polymer compound in combination with a resin, particularly a biodegradable resin, this polymer compound is the first to incur primary degradation in seawater and has (1) the effect of forming holes in the resin material, increasing the specific surface area of the resin and stimulating the growth of microorganisms which carry out degradation, and (2) the effect of, owing to primary degradation, accelerating secondary degradation, i.e., biodegradation by microorganisms. As a result, the biodegradation of resin materials in the ocean can be accelerated. This discovery ultimately led to the present invention.

Accordingly, this invention provides the following marine biodegradable polymer compound, method for preparing the same and marine biodegradable resin composition.

1. A marine biodegradable polymer compound which includes as essential units:

(A) a structural unit A derived from a marine biodegradable linking agent which is a compound that includes on the molecule two or more reactive groups X and has, on a main chain, a structure which includes two or more organic anions having molecular weights of from 100 to 10,000 and in which the organic anions are bound by ionic bonds with a metal cation having a valence of two or more, and

(B1) a structural unit B1 derived from a compound having on the molecule two or more reactive groups Y that react with the reactive groups X or (B2) a structural unit B2 derived from a ring-opening polymerizable cyclic compound in which reactive groups Y that react with the reactive groups X form on the molecule due to ring opening;

and which, when including structural unit B1, additionally includes:
(C) a structural unit C derived from a compound, other than the marine biodegradable linking agent, which includes on the molecule two or more reactive groups X.

2. The marine biodegradable polymer compound of 1 above, wherein the organic anions are of at least one type selected from the group consisting of the carboxylate anion (-COO⁻), sulfonate anion (-SO₃⁻), sulfate anion (-O-SO₃⁻) and phosphate anion (-P(=O)(OH)-O⁻).

3. The marine biodegradable polymer compound of 1 or 2 above, wherein the organic anions have repeating units containing at least one bond selected from the group consisting of ether, ester, amide and carbonate bonds.

4. The marine biodegradable polymer compound of any of 1 to 3 above, wherein the metal cation having a valence of two or more is a calcium ion, beryllium ion, magnesium ion, strontium ion, barium ion, zinc ion, aluminum ion, iron ion, copper ion, platinum ion, gold ion, titanium ion, nickel ion, cobalt ion, manganese ion, zirconium ion, ruthenium ion, rhodium ion, palladium ion, scandium ion, gallium ion, indium ion or radium ion.

5. The marine biodegradable polymer compound of any of 1 to 4 above, wherein the number of equivalents of metal ions having a valence of two or more on the molecule is on average from 1 to 100 eq/$10^5$ g.

6. The marine biodegradable polymer compound of any of 1 to 5 above, wherein the marine biodegradable linking agent (A) has a melting temperature of 180°C or below.

7. The marine biodegradable polymer compound of any of 1 to 6 above, wherein the average number of metal cations included per molecule of the marine biodegradable linking agent (A) is larger than 1.

8. The marine biodegradable polymer compound of any of 1 to 7 above, wherein the marine biodegradable linking agent (A) has a degree of degradation relative to cellulose that is 40% or more.

9. The marine biodegradable polymer compound of any of 1 to 8 above, wherein reactive groups X and reactive groups Y are each independently hydroxy groups, amino groups, isocyanate groups or carboxyl groups.

10. The marine biodegradable polymer compound of any of 1 to 9, wherein structural units A and structural units C are included in a molar ratio therebetween (A:C) of from 0.1:99.9 to 90:10.

11. The marine biodegradable polymer compound of any of 1 to 10 above, wherein the compound is a polyester, polyurethane, polyamide or polyurea.

12. The marine biodegradable polymer compound of any of 1 to 11 above, wherein one or more of the marine biodegradable linking agent (A), compound (B1) and compound (C) has a functionality of three or more.

13. The marine biodegradable polymer compound of any of 1 to 12 above, wherein the compound is end-capped.

14. An additive consisting of the marine biodegradable polymer compound of any of 1 to 13 above.

15. A marine biodegradable resin composition which includes the marine biodegradable polymer compound of any of 1 to 13 above.

16. The marine biodegradable resin composition of 15 above, further including a biodegradable resin.

17. The marine biodegradable resin composition of 16 above, wherein the content of the marine biodegradable polymer compound is from 1 to 99 wt% and the content of the biodegradable resin is from 1 to 99 wt%.

18. A formed body obtained from the marine biodegradable resin composition of any of 15 to 17 above.

19. A method for preparing a marine biodegradable polymer compound, which method includes the step of polymerizing (A) a marine biodegradable linking agent which is a compound that includes on the molecule two or more reactive groups X and has, on a main chain, a structure which includes two or more organic anions having molecular weights of from 100 to 10,000 and in which the organic anions are bound by ionic bonds with a metal cation having a valence of two or more, (B1) a compound having on the molecule two or more reactive groups Y that react with the reactive groups X and (C) a compound, other than the marine biodegradable linking agent, which includes on the molecule two or more reactive groups X; or the step of polymerizing (A) a marine biodegradable linking agent which is a compound that includes on the molecule two or more reactive groups X and has, on a main chain, a structure which includes two or more organic anions having molecular weights of from 100 to 10,000 and in which the organic anions are bound by ionic bonds with a metal cation having a valence of two or more and (B2) a ring-opening polymerizable cyclic compound in which reactive groups Y that react with the reactive groups X form on the molecule due to ring opening.

20. The method for preparing a marine biodegradable polymer compound of 19 above, wherein the polymerization is polycondensation.

21. The method for preparing a marine biodegradable polymer compound of 19 or 20 above, further including the step of, prior to polymerization, mixing together the marine biodegradable linking agent (A), compound (B1) and compound (C1), or the marine biodegradable linking agent (A) and compound (B2).

22. The method for preparing a marine biodegradable polymer compound of any of 19 to 21 above, wherein the ratio in which the marine biodegradable linking agent (A) is used relative to compound (C), expressed as the molar ratio (A):(C), is from 0.1:99.9 to 90:10.

23. The method for preparing a marine biodegradable polymer compound of any of 19 to 22 above, wherein the marine biodegradable linking agent (A) has a melting temperature of 180°C or below and polymerization is carried out by melting the marine biodegradable linking agent (A), compound (B1) and compound (C) or by melting the marine biodegradable linking agent (A) and compound (B2).

24. A compound having, on a main chain, a structure which includes two or more organic anions having molecular weights of from 100 to 10,000 and in which the organic anions are bound by ionic bonds with a metal cation having a valence of two or more, and including on the molecule two or more amino groups, carboxyl groups, thiol groups, vinyl groups or isocyanate groups.

## ADVANTAGEOUS EFFECTS OF INVENTION

Because the marine biodegradable polymer compound of the invention has marine biodegradability, the biodegradation in the oceans of compositions and formed bodies containing the compound is accelerated, making this compound useful as a measure for controlling marine pollution. Environmentally friendly compositions and formed bodies can be obtained by using the marine biodegradable polymer compound of the invention.

## DESCRIPTION OF EMBODIMENTS

[Marine Biodegradable Polymer Compound]

The marine biodegradable polymer compound of the invention includes as essential units: (A) a structural unit A derived from a marine biodegradable linking agent (also referred to below as the "marine biodegradable linking agent (A)") which is a compound that includes on the molecule two or more reactive groups X and has, on a main chain, a structure which includes two or more organic anions having molecular weights of from 100 to 10,000 and in which the organic anions are bound by ionic bonds with a metal cation having a valence of two or more, and (B1) a structural unit B1 derived from a compound having on the molecule two or more reactive groups Y that react with the reactive groups X (also referred to below as "compound (B1)") or (B2) a structural unit B2 derived from a ring-opening polymerizable cyclic compound in which reactive groups Y that react with the reactive groups X form on the molecule due to ring opening (also referred to below as "compound (B2)"). In cases where the marine biodegradable polymer compound of the invention includes structural unit B1, it additionally includes (C) a structural unit C derived from a compound, other than the marine biodegradable linking agent, which includes on the molecule two or more reactive groups X (also referred to below as "compound (C)").

The marine degradable linking agent (A) consists of a compound that includes on the molecule two or more reactive groups X and has, on a main chain, a structure which includes two or more organic anions having molecular weights of from 100 to 10,000 and in which the organic anions are bound by ionic bonds with a metal cation having a valence of two or more.

From the standpoint of the biodegradability in seawater and the mechanical properties, the organic anions have molecular weights of from 100 to 10,000. The lower limit in the molecular weights is preferably 400 or more, more preferably 500 or more, even more preferably 600 or more, and most preferably 700 or more. The upper limit in the molecular weights is preferably 6,000 or less, more preferably 5,000 or less, even more preferably 4,000 or less, and most preferably 3,000 or less. At molecular weights greater than 10,000, biodegradation is difficult; at molecular weights lower than 100, the proportion of ions in the resin becomes higher and the mechanical properties may decline, which is undesirable. The molecular weight of an organic anion in this invention refers to the number-average molecular weight determined by end group analysis.

The organic anions are preferably ones having a monovalent anionic substituent selected from the group consisting of the carboxylate anion ($-COO^-$), the sulfonate anion ($-SO_3^-$), the sulfate anion ($-O-SO_3^-$) and the phosphate anion ($-P(=O)(OH)-O^-$). It is especially preferable for carboxylate anions to be included as the organic anions.

The organic anions preferably have repeating units containing at least one bond selected from the group consisting of ether, ester, amide and carbonate bonds. Specifically, the repeating units are preferably ones derived from a polyalkylene glycol, polyester, polycaprolactone, polycarbonate or polyamide.

The metal cation having a valence of two or more is not particularly limited. Examples include calcium, beryllium, magnesium, strontium, barium, zinc, aluminum, iron, copper, platinum, gold, titanium, nickel, cobalt, manganese, zirconium, ruthenium, rhodium, palladium, scandium, gallium, indium and radium ions. Of these, preferred examples include calcium, beryllium, magnesium, strontium, barium, zinc and aluminum ions. Calcium, magnesium and aluminum ions are more preferred.

The number of metal cations included on one molecule of the marine biodegradable linking agent (A) is on average one or more; from the standpoint of being able to obtain an even higher marine biodegradability promoting effect, the number of metal cations is preferably larger than 1. From the standpoint of the mechanical properties, the upper limit in the number of metal cations is preferably 10 or less, and more preferably 3 or less. That is, the marine biodegradable linking agent (A) is preferably a mixture of a compound with a structure in which two or more monovalent organic anions having at least one reactive group X and one monovalent anionic substituent are bonded with a single metal cation having a valence of two or more (which compound is also referred to below as "compound (A1)") and a compound with a structure in which a polyvalent organic anion having two or more monovalent anionic substituents is bonded with a metal cation having a valence of two or more and which is capped at the end, through a metal cation having a valence of two or more, with a monovalent organic anion having at least one reactive group X and one monovalent anionic substituent (which compound is also referred to below as "compound (A2)"). In other words, compound (A2) includes, through a metal cation having a valence of two or more, one or more structural unit consisting of a polyvalent organic anion having two or more monovalent anionic substituents, and is capped at the end, through a metal cation having a valence of two or more, with a monovalent organic anion. That is, compound (A1) has only one metal cation per molecule, and compound (A2) has two or more metal cations per molecule.

The marine biodegradable linking agent (A) preferably has a melting temperature of 180°C or less. Taking into account the handleability, the reactivity with other ingredients, and the physical properties of the resulting polymer compound, the melting temperature is preferably between 40°C and 180°C, and more preferably between 60°C and 150°C.

The marine biodegradable linking agent (A) has a degree of degradation relative to cellulose that is preferably 40% or more. In this invention, "degree of degradation relative to cellulose" refers to the degree of degradation relative to cellulose after 60 days immersion in seawater. The marine biodegradable linking agent (A) has a degree of degradation relative to cellulose that is more preferably 50% or more, even more preferably 60% or more, and most preferably 80% or more. The degree of degradation relative to cellulose can be measured in accordance with, for example, ASTM D6691, or by a biochemical oxygen demand (BOD)-based marine biodegradation test method modified with reference thereto.

The reactive groups X are preferably groups selected from among hydroxy, amino, carboxyl and isocyanate groups. From the standpoint of reactivity and chemical stability, hydroxy, amino and carboxyl groups are more preferred, hydroxy and amino groups are even more preferred, and hydroxy groups are most preferred. The marine biodegradable linking agent (A) preferably has a reactive group X at the end of the main chain.

From the standpoint of biodegradability, the marine biodegradable linking agent (A) is preferably difunctional, although a compound having a functionality of three or more may be used in order to modify the physical properties and biodegradability.

From the standpoint of promoting biodegradability, the marine biodegradable linking agent (A) preferably does not include any cyclic structures. However, cyclic structures may be introduced in order to adjust the physical properties and biodegradability.

The marine biodegradable linking agent (A) has a number-average molecular weight of preferably from 500 to 10,000. Taking into consideration the handleability and mechanical properties, the number-average molecular weight is more preferably from 1,000 to 8,000, and even more preferably from 1,500 to 6,000. A number-average molecular weight within this range is preferable from the standpoint of controlling the reactivity and the overall biodegradation rate. The number-average molecular weight is a polystyrene-equivalent measured value obtained by gel permeation chromatography (GPC).

The marine biodegradable linking agent (A) can be synthesized by introducing the above-described monovalent anionic substituents onto a compound having two or more reactive groups X, and using a salt compound (a polyvalent metal salt) having a metal cation with a valence of two or more to effect ionic bonding.

Exemplary compounds having two or more reactive groups X include polyols, polyamines, polycarboxylic acids or acid chlorides thereof, and polyisocyanates.

The polyols are exemplified by compounds having two or more hydroxy groups, such as polyalkylene glycols, polycaprolactone polyols, polyester polyols, polyamide polyols, polyester polyamide polyols and polycarbonate polyols. Specific examples include polyethylene glycol, polypropylene glycol, PLACCEL 210B, 220N and 308 (from Daicel Corporation), bis(4-hydroxybutyl)polybutylene succinate, bis(6-hydroxyhexyl)polybutylene succinate, bis(4-hydroxybutyl)polybutylene adipate, N,N'-bis(4-hydroxybutyl)poly(hexamethylene-adipate), bis(4-hydroxybutyl)polybutylene terephthalate, and Kuraray Polyol P-510, P-1010, P-2010, P-2050, P-520, C-590 and F-1010 (from Kuraray Co., Ltd.). These may be synthesized by known methods, or commercially available products may be used.

The polyamines are exemplified by compounds having two or more amino groups, such as polyalkylene glycol diamines, polycaprolactam polyamines, polyester polyamines, polyamide polyamines, polyester polyamide polyamines and polycarbonate polyamines. Specific examples include bis(2-aminoethyl)polyethylene glycol, bis(2-aminopropyl) polypropylene glycol, poly(hexano-6-lactam)-1,2-ethanediylamide, bis(4-aminobutyl)polybutylene succinate, bis(6-aminohexyl)polybutylene succinate, N,N'-bis(4-aminobutyl)poly(tetramethylene succinamide) and N,N'-bis(6-aminohexyl) poly(hexamethylene succinamide). These may be synthesized by known methods, or commercially available products may be used.

The polycarboxylic acids are exemplified by compounds having two or more carboxyl groups, such as polyalkylene glycol dicarboxylic acids, polycaprolactone polycarboxylic acids, polycaprolactam polycarboxylic acids, polyester polycarboxylic acids, polyamide polycarboxylic acids, polyester polyamide polycarboxylic acids and polyacrylic acids. Specific examples include polyethylene glycol disuccinate, polypropylene glycol disuccinate, poly(hexano-6-lactone)-1,2-ethanediyl ether disuccinate, bis(4-succinyloxybutyl)polybutylene succinate, bis(4-adipoyloxybutyl)polybutylene adipate, N,N'-bis(4-succinyloxybutyl)poly(tetramethylene succinamide) and N,N'-bis(6-succinylbutylhexyl) poly(hexamethylene succinamide). These may be synthesized by known methods, or commercially available products may be used.

The polyisocyanates are exemplified by compounds having two or more isocyanate groups, such as polyalkylene diisocyanates, polycaprolactone polyisocyanates, polyalkylene polyol polyisocyanates and polyalkylene polyamine polyisocyanates. Specific examples include bis(2-isocyanatoethyl)polyethylene glycol, polypropylene glycol disuccinate, poly(hexano-6-lactam)-1,2-ethanediylamide diisocyanate, bis(4-isocyanatobutyl)polybutylene succinate, bis(6-isocyanatohexyl)polybutylene succinate, N,N'-bis(4-isocyanatobutyl)poly(tetramethylene succinamide) and N,N'-bis(6-isocyanatohexyl)poly(hexamethylene succinamide). These may be synthesized by known methods, or commercially available products may be used.

Exemplary methods for introducing a monovalent anionic substituent onto a compound having two or more reactive groups X include, in cases where -COO$^-$ is introduced, methods that effect an esterification reaction or amidation reaction between the above compound having two or more reactive groups X and a dicarboxylic anhydride in the presence of a monovalent metal salt. Examples of the dicarboxylic anhydride include phthalic anhydride, trimellitic anhydride (which compound has one acid anhydride group and one carboxyl group), pyromellitic anhydride, 5-norbornene-endo-2,3-dicarboxylic anhydride, naphthyl anhydride, naphthalenetetracarboxylic dianhydride, maleic anhydride, succinic anhydride and chlorendic anhydride. Of these, succinic anhydride, maleic anhydride and phthalic anhydride are preferred. Taking the biodegradability into account, succinic anhydride and maleic anhydride are more preferred. In cases where -SO$_3$$^-$ is introduced, exemplary methods include those that effect a reaction between a compound having hydroxy groups or amino groups as the reactive groups X and SO$_3$ or a SO$_3$-Lewis base complex in an aprotic polar solvent. A tertiary amine, pyridine, DMF or the like may be used as the Lewis base. Acetonitrile or the like is preferred as the aprotic polar solvent. These reactions may be carried out by known methods.

Exemplary methods for inducing ionic bonding using a polyvalent metal salt include the method of adding dropwise a powder or solution of a polyvalent metal salt to a medium that dissolves the product obtained by introducing a monovalent anionic substituent onto a compound having two or more reactive groups X (which product is also referred to below as "Precursor A"), and inducing settling out or precipitation while carrying out bonding treatment; and the method of adding dropwise a solution of Precursor A to a powder or solution of a polyvalent metal salt powder, and inducing settling out or precipitation while carrying out bonding treatment.

For example, first a solution of Precursor A dissolved in water or a mixed solvent of water and a hydrophilic organic solvent is prepared. If necessary, heating may be carried out at this time to increase the solubility. Next, a polyvalent metal salt-containing solution is added and stirring is carried out. Alternatively, a solution of dissolved Precursor A may be added to a polyvalent metal salt-containing solution and stirring carried out.

Examples of the polyvalent metal salt include calcium salts, strontium salts, magnesium salts, barium salts, radium salts, lead salts, zinc salts, nickel salts, iron salts, copper salts, cadmium salts, cobalt salts, manganese salts, aluminum salts, gallium salts, indium salts and thallium salts. Calcium salts, magnesium salts and aluminum salts are preferred because they contain metals which are present in seawater and also for environmental reasons and in terms of safety and flexibility. Taking into account the environment in seawater, calcium salts and magnesium salts are more preferred. Specific examples of such polyvalent metal salts include calcium chloride, calcium sulfate, calcium carbonate, calcium hydroxide, calcium oxide, magnesium chloride, magnesium sulfate, magnesium carbonate, magnesium hydroxide, magnesium oxide, aluminum sulfate and potassium aluminum sulfate (potassium alum). In terms of solubility in water, handleability, cost and the like, calcium chloride, magnesium chloride and aluminum sulfate are preferred

The concentration of polyvalent metal salt within the polyvalent metal salt-containing solution is preferably from 1 to 40 wt%, and more preferably from 10 to 30 wt%. Water, lower alcohol-type solvents such as methanol, ethanol, 1-propanol and 2-propanol, and mixed solvents thereof are preferred as the solvent for this solution, although mixed solvents with other organic solvents are also acceptable so long as they can dissolve the salt to the target concentration without dissolving the particles.

If the polyvalent metal salt has a good reactivity and reacts even in a solid state, it may be used in the form of a powder without employing a medium or it may be dispersed in a small amount of medium and used.

In this way, ionic bonding treatment can be carried out, and the target marine biodegradable linking agent (A) that has gradually become insoluble separates out or precipitates. The treatment time is preferably from 0.5 to 24 hours, and more preferably from 1 to 12 hours.

In order to control the particle size of the separated out or precipitated matter, a surfactant or polymer stabilizer may be dissolved at this time in either or both the solution in which Precursor A is dissolved and the polyvalent metal salt-containing solution.

Heating may be carried out when causing the target marine biodegradable linking agent (A) to separate out or precipitate. Heating may be carried out when mixing together the solution in which Precursor A has been dissolved and the polyvalent metal salt-containing solution, may be carried out during stirring following mixture, or may be carried out at both of these times. The heating temperature is preferably between 15°C and 100°C, and more preferably between 40°C and 80°C.

Following treatment, the marine biodegradable linking agent (A) may be obtained by optionally washing and drying the particles. Washing may be carried out by an ordinary method such as that of, for example, removing the solvent following bonding treatment, adding water, and centrifugation. Drying may be carried out by an ordinary method such as spray drying, vacuum drying or freeze drying. If necessary, the particle size of the resulting marine biodegradable linking agent (A) may be adjusted by carrying out surface treatment or crushing treatment using known equipment.

Compound (B1) is not particularly limited so long as it is a compound containing two or more reactive groups Y that react with the reactive groups X. Compound (B2) is not particularly limited so long as it is a ring-opening polymerizable cyclic compound that forms reactive groups Y on the molecule due to ring opening. Compound (C) is not particularly limited so long as it is a compound, other than marine biodegradable linking agent (A), which contains two or more reactive groups X on the molecule.

The reactive groups X are as described above. The reactive groups Y are not particularly limited so long as they are entities that react with the reactive groups X. However, from the standpoint of reactivity and chemical stability, groups selected from among hydroxy, amino, carboxyl and isocyanate groups are preferred. Of these, carboxyl groups or isocyanate groups are more preferred.

Compounds having two or more reactive groups X or reactive groups Y are exemplified by polyols, polyamines, polycarboxylic acids or acid chlorides thereof, and polyisocyanates.

The polyols are not particularly limited so long as they are compounds having two or more hydroxy groups, although ones having from 2 to 20 carbon atoms are preferred. Specific examples include ethylene glycol, glycerol, 1,2-propanediol, 1,3-propanediol, 1,4-butanediol, 2-butene-1,4-diol, 1,2,3-butanetriol, 1,2,4-butanetriol, 1,5-pentanediol, 2,4-pentanediol, 1,2,5-pentanetriol, 2-hydroxy-2-ethyl-1,3-propanol, 1,2-cyclohexanediol, 1,3-cyclohexanediol, 1,4-cyclohexanediol, 1,3,5-cyclohexanetriol, 1,6-hexanediol, 2,5-hexanediol, 3-methyl-1,5-pentanediol, 1,7-heptanediol, 1,4-benzenedimethanol, 3,6-diazaoctane-1,8-diol, 2,6-dihydroxynaphthalene, 1,9-nonanediol, 1,10-decanediol, 1,11-undecanediol, 1,12-dodecanediol, 1,14-tetradecanediol, 1,16-hexadecanediol, 1,18-octadecanediol, phloroglucinol, pyrogallol, 1,2,4-benzenetriol, 4,4'-dihydroxybiphenyl, 4,4'-dihydroxydiphenylmethane, 4,4'-dihydroxydiphenyl ether and polyethylene glycol.

The polyamines are not particularly limited so long as they are compounds having two or more amino groups, although ones having from 2 to 20 carbon atoms are preferred. Specific examples include aliphatic polyamines such as 1,4-butanediamine, hexamethylenediamine, ethylenediamine, 1,2-diaminopropane, 1,3-diaminopropane, 1,5-diaminopentane, 1,7-diaminoheptane, 1,8-diaminooctane, 1,10-diaminodecane, 1,12-diaminododecane, 3,3-diaminodipropylamine, 1,4-cyclohexadiamine, spermine, spermidine and triethylenetetramine; and aromatic polyamines such as 1,4-phenylenediamine, 1,2-diphenylethylenediamine and o-tolidine.

The polycarboxylic acids are not particularly limited so long as they are compounds having two or more carboxyl groups, although ones having from 2 to 20 carbon atoms are preferred. Specific examples include aromatic dicarboxylic acids such as terephthalic acid, 1,3,5-benzenetricarboxylic acid, isophthalic acid, 2,6-naphthalenedicarboxylic acid and biphenyldicarboxylic acid; and aliphatic dicarboxylic acids such as oxalic acid, malonic acid, fumaric acid, maleic acid, succinic acid, adipic acid, sebacic acid, 1,2,3-propanetricarboxylic acid, aconitic acid, malic acid and citric acid. These carboxylic acids may be used as is or, if necessary, a compound obtained by conversion to an acid chloride or an active ester in order to increase the reactivity may be used.

The polyisocyanates are not particularly limited so long as they are compounds having two or more isocyanate groups, although ones having from 7 to 20 carbon atoms are preferred. Specific examples include aliphatic diisocyanates such as hexamethylene diisocyanate (HDI), pentamethylene diisocyanate (PDI), isophorone diisocyanate (IPDI), 1,4-cyclohexane diisocyanate and methylenebis(4-cyclohexyl isocyanate); and aromatic diisocyanates such as toluene diisocyanate (TDI), diphenylmethane diisocyanate (MDI), xylene diisocyanate and 1,4-phenylene diisocyanate. Taking into account the biodegradability in the environment, the linear aliphatic isocyanates HDI and PDI are preferred.

Specific examples of compound (B2) include lactones such as lactide, ε-caprolactone, β-propiolactone, β-butyrolactone, γ-butyrolactone, γ-valerolactone, δ-valerolactone, glycolide, coumarin, cyclopentadecanolide and cyclohexadecanolide; and lactams such as 2-piperidone, ε-caprolactam, N-methyl-ε-caprolactam, ω-heptalactam, ω-octalactam, ω-laurinlactam and laurocapram.

From the standpoint of promoting biodegradability, compound (B 1) and compound (C) preferably contain no cyclic structures.

From the standpoint of biodegradability, compound (B1) and compound (C) are preferably difunctional, but compounds have a functionality of three or more may be used to adjust the physical properties and biodegradability.

It is preferable for marine biodegradable linking agent (A), compound (B1) and compound (C) to include no cyclic structures within any of their molecules. Also, marine biodegradable linking agent (A), compound (B1) and compound (C) are preferably all difunctional.

The combination of reactive groups X and reactive groups Y is not particularly limited. However, from the standpoint of handleability, reactivity and the physical properties of the polymer compound, any of the combinations in (1) to (6) below is preferred, any of the combinations in (1) to (4) is more preferred, the combination in (1) or (2) is even more preferred, and the combination in (1) is most preferred.

(1) A polyester-type polymer compound in which the reactive groups X are hydroxy groups and the reactive groups Y are carboxyl groups. In this case, marine biodegradable linking agent (A) and compound (C) are polyols and compound (B1) is a polycarboxylic acid. Alternatively, marine biodegradable linking agent (A) is a polyol and compound (B2) is a lactone.

(2) A polyurethane-type polymer compound in which the reactive groups X are hydroxy groups and the reactive groups Y are isocyanate groups. In this case, marine biodegradable linking agent (A) and compound (C) are polyols and compound (B1) is a polyisocyanate.

(3) A polyamide-type polymer compound in which the reactive groups X are amino groups and the reactive groups Y are carboxyl groups. In this case, marine biodegradable linking agent (A) and compound (C) are polyamines and compound (B1) is a polycarboxylic acid. Alternatively, marine biodegradable linking agent (A) is a polyamine and compound (B2) is a lactam.

(4) A polyurea-type polymer compound in which the reactive groups X are amino groups and the reactive groups Y are isocyanate groups. In this case, marine biodegradable linking agent (A) and compound (C) are polyamines and compound (B1) is a polyisocyanate.

(5) A polyester-type polymer compound in which the reactive groups X are carboxyl groups and the reactive groups Y are hydroxy groups. In this case, marine biodegradable linking agent (A) and compound (C) are polycarboxylic acids and compound (B1) is a polyol.

(6) A polyamide-type polymer compound in which the reactive groups X are carboxyl groups and the reactive groups Y are amino groups. In this case, marine biodegradable linking agent (A) and compound (C) are polycarboxylic acids and compound (B1) is a polyamine.

The number of equivalents of metal ions in the marine biodegradable polymer compound of the invention is preferably from 1 to 100 eq/$10^5$ g. However, taking into account the biodegradability in seawater and the mechanical properties, the number of equivalents is more preferably from 2 to 50 eq/$10^5$ g, and most preferably from 10 to 20 eq/$10^5$ g. Having the number of equivalents of metal ions fall within this range is desirable because the marine biodegradable polymer compound has a good biodegradability and there is no loss of mechanical properties. The number of equivalents of metal ions is a value measured by inductively coupled plasma mass spectrometry (ICP-MS).

The marine biodegradable polymer compound of the invention has a number-average molecular weight of preferably from 3,000 to 1,000,000. Taking into account the biodegradability, mechanical properties and moldability, the number-average molecular weight is more preferably from 10,000 to 500,000, even more preferably from 20,000 to 200,000, and most preferably from 40,000 to 1,000,000. The number-average molecular weight is the polystyrene-equivalent measured value obtained by gel permeation chromatography (GPC).

From the standpoint of the mechanical properties and the biodegradability, structural units A and structural units C are included in a molar ratio therebetween (A:C) that is preferably from 0.1:99.9 to 90:10, more preferably from 1:99 to 50:50, even more preferably from 2:98 to 20:80, and most preferably from 3:97 to 10:90.

The marine biodegradable polymer compound has a percent weight loss after 60 days immersion in seawater that is preferably 5% or more, more preferably 10% or more, and most preferably 20% or more.

The marine biodegradable polymer compound of the invention may be end-capped. That is, an end group X or an end group Y remaining on the polymer compound may be capped using an end-capping agent. So long as the end-capping agent has reactivity with a terminal substituent, it may be selected from among, for example, monocarboxylic acids, monoacid chlorides, monoesters, monoisocyanates, monoalcohols, monoamines and monoepoxides in accordance with the intended purpose, such as increasing the heat stability or enhancing the physical properties. Specific examples include aliphatic carboxylic acids of 1 to 20 carbon atoms, such as formic acid, acetic acid and stearic acid, acid chlorides of such aliphatic carboxylic acids and acid esters of such aliphatic carboxylic acids; aromatic carboxylic acids of 7 to 20 carbon atoms, such as benzoic acid, 4-methylbenzoic acid, 4-hexylbenzoic acid and naphthalenecarboxylic acid, acid chlorides of such aromatic carboxylic acids and acid esters of such aromatic carboxylic acids; aliphatic isocyanates of 1 to 20 carbon atoms, such as methyl isocyanate and octadodecyl isocyanate; aromatic isocyanates of 7 to 20 carbon atoms, such as phenyl isocyanate and 4-butylphenyl isocyanate; aliphatic alcohols of 1 to 20 carbon atoms, such as methanol, ethanol and stearyl alcohol; aromatic alcohols of 7 to 20 carbon atoms, such as benzyl alcohol and 3-phenyl-1-propanol; aliphatic amines of 1 to 20 carbon atoms, such as methylamine, ethylamine and stearylamine; aromatic amines of 6 to 20 carbon atoms, such as aniline, benzylamine and 4-phenyl-1-butylamine; and epoxides of 2 to 20 carbon atoms, such as 1,2-epoxyheptane, 1,2-epoxyhexane, 1,2-epoxydecane and 1,2-epoxy-5-hexene. From the standpoints of conferring hydrophobicity as well as the environmental impact and reactivity, aliphatic carboxylic acids of 6 to 20 carbon atoms, acid chlorides of such aliphatic carboxylic acids, acid esters of such aliphatic carboxylic acids, and aliphatic isocyanates of 6 to 20 carbon atoms are preferred as the end-capping agent; aliphatic carboxylic acids of 10 to 18 carbon atoms and their acid chlorides are more preferred.

[Method for Preparing Marine Biodegradable Polymer Compound]

The marine biodegradable polymer compound can be obtained by polymerizing the marine biodegradable linking agent (A), compound (B1) and compound (C) or marine biodegradable linking agent (A) and compound (B2). The marine biodegradable linking agent (A) and compounds (B1), (B2) and (C) may each be a single compound used alone or may be two or more compounds used in combination.

Prior to polymerization, it is preferable to mix together marine polymerization linking agent (A), compound (B1) and compound (C), or marine polymerization linking agent (A) and compound (B2). When marine biodegradable linking agent (A), compound (B1) and compound (C) are mixed together, these may be mixed at the same time, or compound (B1) and compound (C) may first be mixed together and marine biodegradable linking agent (A) then mixed into the resulting mixture.

Following mixture, a catalyst may be optionally added. Specific examples of the catalyst will be subsequently described.

Polymerization is preferably effected by melting marine biodegradable linking agent (A), compound (B1) and compound (C) or marine biodegradable linking agent (A) and compound (B2), and then heating these compounds in the molten state. At this time, from the standpoints of handleability and biodegradability, the melting temperature of marine biodegradable linking agent (A) is preferably 200°C or less, and more preferably 180°C or less. Although the melting temperatures of compounds (B1), (B2) and (C) need not be 180°C or less, it is preferable to effect polymerization by heating the starting compounds to a temperature at which they all melt.

The polymerization is preferably polyaddition or polycondensation, although polycondensation is more preferred.

When polymerizing marine biodegradable linking agent (A), compound (B1) and compound (C), these compounds are preferably used in amounts such that the ratio of reactive group equivalents in marine biodegradable linking agent (A) and compound (C) to the reactive group equivalents in compound (B1), expressed as [(A) + (C)] : (B1), is from 0.75 to 1.25. In cases where marine biodegradable linking agent (A) and compound (B2) are polymerized, from the standpoint of the mechanical properties and the biodegradability, these compounds are preferably used in amounts such that the ratio of reactive group equivalents in marine biodegradable linking agent (A) to reactive group equivalents in compound (B2), expressed as (A)/(B2), is from 0.001 to 0.1.

Also, when polymerizing marine biodegradable linking agent (A), compound (B1) and compound (C), from the standpoints of the mechanical properties and biodegradability, the ratio of the amount of marine biodegradable linking agent (A) used relative to the amount of compound (C) used, expressed as the molar ratio (A) : (C), is preferably from 0.1:99.9 to 90:10, more preferably from 1:99 to 50:50, even more preferably from 2:98 to 20:80, and most preferably from 3:97 to 10:90.

In cases where the marine biodegradable polymer compound of the invention is a polyester-type polymer compound; i.e., in cases where the reactive groups X are hydroxy groups and the reactive groups Y are carboxyl groups or in cases where the reactive groups X are carboxyl groups and the reactive groups Y are hydroxy groups, reference can be made to known methods for polymerizing polyesters. For example, reference can be made to the methods described in Sen'i to Kogyo, Vol. 40, No. 4.5, pp. 259-261 (1984).

A polycondensation catalyst such as antimony trioxide, a germanium catalyst or a titanium catalyst, or a catalyst commonly used in transesterification, such as magnesium acetate or manganese acetate, may be optionally used in the polyester polymerization reaction for the purpose of accelerating the reaction. Taking into account the environmental impact, a catalyst which does not include a metal is preferred. The catalyst is used in an amount which is preferably from about 0.01 to about 5 parts by weight per 100 parts by weight of Compound (B1).

In cases where the marine biodegradable polymer compound of the invention is a polyamide-type polymer compound; i.e., in cases where the reactive groups X are amino groups and the reactive groups Y are carboxyl groups, or in cases where the reactive groups X are carboxyl groups and the reactive groups Y are amino groups, reference can be made to known methods for polymerizing polyamides. For example, reference can be made to the methods described in JP-B S52-12233 and JP-B H5-71056.

A polycondensation catalyst such as a metal salt, ammonium salt or ester of phosphoric acid, phosphorous acid or hypophosphorous acid may be optionally used in the polyamide polymerization reaction for the purpose of accelerating the reaction. The catalyst is used in an amount which is preferably from about 0.01 part by weight to about 1.0 part by weight per 100 parts by weight of compound (B1).

In cases where the marine biodegradable polymer compound of the invention is a polyurethane-type polymer compound; i.e., in cases where the reactive groups X are hydroxy groups and the reactive groups Y are isocyanate groups, or in cases where the reactive groups X are isocyanate groups and the reactive groups Y are hydroxy groups, reference can be made to known methods for polymerizing polyurethanes. For example, reference can be made to the methods described in Nettowaku Porima Ronbunshu [Journal of Network Polymers], Vol. 39, No. 1, pp. 10-19 (2018).

The reaction of the marine biodegradable polyol with a diisocyanate may use, for the purpose of shortening the reaction time or lowering the reaction temperature owing to an increase in reactivity, an amine-type catalyst such as 1,4-diazabicyclo[2.2.2]-octane (DABCO), 1,8-diazabicyclo-[5.4.0]-undeca-7-ene (DBU), N,N-dimethylcyclohexylamine (DMCA) or triethylamine; or a tin catalyst such as dibutyltin dilaurate, tetramethyltin, tetrabutyltin, tetraoctyltin, tributyltin chloride, dibutyltin dichloride, dimethyltin oxide, trimethyltin chloride, dimethyltin dichloride, trioctyltin chloride, dibutyltin oxide, dibutyltin diacetate, butyltin trichloride, dioctyltin dichloride, dioctyltin oxide, dioctyltin dilaurate or dioctyltin diacetate. Alternatively, zinc complexes, iron complexes, bismuth complexes and zirconium complexes analogous to these tin complexes are also useful as the catalyst. Taking into account the environmental impact, a catalyst which does not include a metal is preferred. The catalyst is used in an amount which is preferably from about 0.01 to about 5 parts by weight per 100 parts by weight of compound (B1).

In cases where the marine biodegradable polymer compound of the invention is a polyurea-type polymer compound; i.e., in cases where the reactive groups X are amino groups and the reactive groups Y are isocyanate groups, or in cases where the reactive groups X are isocyanate groups and the reactive groups Y are amino groups, reference can be made to known methods for polymerizing polyureas. For example, reference can be made to the methods described in JP-A 2004-27148.

A transesterification catalyst or polycondensation catalyst, examples of which include salts, alkoxides and organometallic compounds containing a metal such as lithium, sodium, magnesium, aluminum, potassium, titanium, cobalt, germanium, zinc, rubidium, strontium, tin, antimony, cesium, barium or lead, may be optionally used in the polyurea polymerization reaction for the purpose of accelerating the reaction. The catalyst is used in an amount which is preferably from about 0.00001 to about 0.1 part by weight per 100 parts by weight of Compound (B1).

In all of the polymerization reactions, the polymerization temperature is preferably between about 130°C and about 300°C, and more preferably between about 160°C and about 230°C. The polymerization time is preferably from about 0.5 hour to about 24 hours, and more preferably from about 1 hour to about 12 hours.

In cases where the marine biodegradable polymer compound is end-capped, capping may be carried out by adding the above-described end-capping agent following the completion of polymerization or by adding the above-described end-capping agent to the polymerization solution, either before the polymerization reaction or during the polymerization reaction. In cases where end-capping is carried out by adding an end-capping agent following the completion of polymerization, the end-capping method may involve, for example, melting the marine biodegradable polymer compound and adding the end-capping agent to the molten polymer compound to effect the reaction. The temperature at which the marine biodegradable polymer compound is melted at this time, although not particularly limited, is typically between about 130°C and about 280°C. The reaction time, although not particularly limited, is generally from about 1 hour to about 6 hours. In cases where end-capping is carried out by adding an end-capping agent to the polymerization solution, either before or during the polymerization reaction, the end-capping method may involve, for example, adding the end-capping agent to the above-described mixture of the starting compounds and thereby capping the ends concurrent with the polymerization reaction. In this case, the end-capping agent may be added before the reaction starts, may be added after the starting materials other than the end-capping agent have been melted, or may be added during the polymerization reaction. However, to increase the molecular weight, addition after the starting materials other than the end-capping agent have been melted or addition during the polymerization reaction is preferred. Regardless of which method is used, the amount of the end-capping agent added is preferably from about 0.05 wt% to about 10 wt%, and more preferably from about 0.1 wt% to about 5 wt%, of all the starting compounds. The end-capping agent may be a single compound used alone or two or more compounds may be used in combination.

[Marine Biodegradable Resin Composition]

The marine biodegradable resin composition of the invention includes the above-described marine biodegradable polymer compound.

The above marine biodegradable polymer compound may be used as the chief ingredient or it may be used as an additive in combination with another resin. The other resin is not particularly limited, although a biodegradable resin is preferred. When used as an additive in combination with another resin, the above marine biodegradable polymer compound functions as a marine biodegradation promoter. The resulting resin composition is one whose biodegradation is accelerated in the ocean. In order to adjust the physical properties and handleability of the resin composition, a plurality of resin types may be used in combination as the other resin.

Examples of the other resins include polyethylene, polyester, polypropylene, polyethylene terephthalate, vinyl chloride, polystyrene, polyurethane, epoxy resins, chlorinated polyethylene resins, chlorinated polypropylene resins, modified nylon resins, phenolic resins, silicone resins, polyvinyl acetate, ethylene-vinyl acetate copolymers, polyvinyl chloride, polyvinylidene chloride, styrene-maleic acid resins, styrene-butadiene resins, butadiene resins, acrylonitrile-butadiene resins, poly(meth)acrylonitrile resins, (meth)acrylamide resins, bioPET, biopolyamides, biopolycarbonates, biopolyurethanes, polyvinyl alcohols, polybutylene adipate/terephthalate, polyethylene terephthalate succinate, biopolybutylene succinate, polylactic acid blends, starch-blended polyester resins, polybutylene terephthalate succinate, polylactic acid and polyhydroxyalkanoates. From the standpoint of reducing the impact on the environment, resins having a high biodegradability are especially preferred.

Examples of such biodegradable resins include resins for which the raw materials are derived from petroleum, such as polycaprolactone, poly(caprolactone/butylene succinate), polybutylene succinate (PBS), poly(butylene succinate/adipate) (PBSA), poly(butylene adipate/terephthalate) (PBAT), poly(butylene succinate/carbonate), polyethylene terephthalate copolymer, poly(ethylene terephthalate/succinate), poly(tetramethylene adipate/terephthalate), polyethylene succinate, polyvinyl alcohol, polyglycolic acid, glycolic acid/caprolactone copolymers and glycolic acid/trimethylene carbonate copolymers; resins for which the raw materials are partially derived from biomass, such as (polylactic acid/polybutylene succinate-based) block copolymers, (polylactic acid/polycaprolactone) copolymers, (polylactic acid/polyether) copolymers, polylactic acid-blended PBAT, lactic acid/glycolic acid copolymers, biopolybutylene succinate, poly(butylene succinate/adipate), starch-blended polyester resins and poly(butylene terephthalate succinate); resins for which the raw materials are 100% derived from biomass, including polyhydroxyalkanoates such as polyhydroxybutyrate, polyhydroxyvalerate, polyhydroxycaprylate, poly(hydroxybutyrate/hydroxyhexanoate) (PHBH), poly(3-hydroxybutyrate/4-hydroxybutyrate) (P3HB4HB) and poly(hydroxybutyrate/hydroxyvalerate) (PHBV), and also polylactic acid (PLA); and resins derived from naturally occurring macromolecules such as cellulose, cellulose acetate, cellulose ester resins, starches, esterified starches and chitosan.

Of these, it is preferable to combine a resin which, as a biodegradable resin, has biodegradability in soil or compost but for which the biodegradability in the ocean is poor, such as a biodegradable resin selected from among polycaprolactone, bio(PBS), PBSA, PBAT, poly(tetramethylene adipate/terephthalate), poly(butylene succinate/carbonate), polyhydroxyalkanoates such as PHBH and PHBV, PLA and resins derived from naturally occurring macromolecules such as cellulose, starch and chitosan, with the above marine biodegradable polymer compound. The biodegradable resin is more preferably PBSA, PBS, PBAT, PLA or a resin derived from starch.

To reduce the burden on the environment, the resin raw material which is combined with the marine biodegradable polymer compound is preferably derived from biomass, and is most preferably a raw material that is 100% derived from biomass.

The marine biodegradable resin composition of the invention may include a solvent. The solvent may be one which dissolves the resin serving as the matrix while leaving the marine biodegradable polymer compound undissolved as particles, or may be one which dissolves both the resin and the marine biodegradable polymer compound. By suitably adjusting these ingredients, the resin composition may be used as a formed body obtained by film formation such as by casting, or as a coating, ink, surface treatment agent or the like. Examples of preferred solvents include water, formic acid, hexane, heptane, acetonitrile, N-methylpyrrolidone, dimethylformamide, dimethylacetamide, dimethylsulfoxide, dimethylsulfone, acetone, methyl ethyl ketone, diethyl ketone, acetophenone, dimethyl ether, dipropyl ether, tetrahydrofuran, chloroform, methylene chloride, trichloroethylene, ethylene dichloride, dichloroethane, tetrachloroethane, chlorobenzene, methanol, ethanol, n-propanol, isopropanol, butanol, pentanol, hexafluoroisopropanol, methyl glycol, methyl triglycol, hexyl glycol, phenyl glycol, ethylene glycol, propylene glycol, phenol, cresol, polyethylene glycol, benzene, toluene and xylene. One of these may be used alone or two or more may be used in admixture.

When using a solvent, the total concentration of resin and marine biodegradable polymer compound in the resin composition is preferably from 0.5 to 90 wt%, more preferably from 1 to 80 wt%, even more preferably from 5 to 60 wt%, and most preferably from 10 to 50 wt%. The proportion of marine biodegradable polymer compound relative to the resin, expressed as a weight ratio, is preferably from 99:1 to 10:90, more preferably from 97:3 to 40:60, even more preferably from 95:5 to 50:50, and most preferably from 90:10 to 60:40.

The marine biodegradable resin composition of the invention need not include a solvent. In this case, the resin may be heat-melted and marine biodegradable polymer compound that does not melt therein may be added to and mixed with the molten resin, or the resin and the marine biodegradable polymer compound may both be melted and mixed together.

The content of the marine biodegradable polymer compound within the marine biodegradable resin composition of the invention is preferably from 1 to 50 wt%, more preferably from 3 to 50 wt%, even more preferably from 5 to 45 wt%, still more preferably from 7 to 40 wt%, and most preferably from 10 to 35 wt%. The resin content is preferably from 50 to 99 wt%, more preferably from 50 to 97 wt%, even more preferably from 55 to 95 wt%, still more preferably from 60 to 93 wt%, and most preferably from 65 to 90 wt%. Inclusion of the marine biodegradable polymer compound within this range enables it to be utilized as a marine biodegradation promoter that promotes biodegradability in seawater while maintaining the properties of the biodegradable resin. The above marine biodegradable polymer compound may be of one type used alone or two or more types may be used in combination.

The marine biodegradable resin composition of the invention may optionally include additives such as antioxidants, parting agents, release agents, surface modifiers, hydrophobizing agents, water repelling agents, hydrophilizing agents, dyes and pigments, colorants, heat stabilizers, light stabilizers, weatherability enhancers, antistatic agents, antifogging agents, lubricants, anti-blocking agents, hardeners, softeners, compatibilizers, flame retardants, flow enhancers, plasticizers, dispersants, antimicrobial agents, fillers and metal inactivators. The content of these additives, although not particularly limited so long as there is no loss in the advantageous effects of the invention, is preferably from about 0.1 to about 50 parts by weight per 100 parts by weight of the resin.

In cases where the marine biodegradable resin composition includes a solvent, the composition may be prepared by, for example, adding the resin, the marine biodegradable polymer compound and the optional additives to the solvent, either at the same time or in any suitable order, and mixing. Alternatively, in cases where the marine biodegradable resin composition does not include a solvent, the resin may be melted and the marine biodegradable polymer compound and the optional additives may be added thereto, either at the same time or in any suitable order, and mixed; or the resin and the marine biodegradable polymer compound may be heated, melted together and mixed, and the optional additives then added and mixed therewith.

[Formed Body]

A formed body composed of a marine biodegradable polymer compound dispersed or dissolved in the resin can be obtained by molding or forming the resin composition. When the resin composition includes a solvent, molding or forming may be carried out using the resin composition directly as is. When the resin composition does not include a solvent, the resin within the resin composition, or both the resin and the marine biodegradable polymer compound, may be melted by applying heat and molding or forming subsequently carried out.

The formed body may be in the shape of a film, fibers, a sheet or an expansion-molded body, or may have some other shape according to the intended use. The molding or forming method is not particularly limited; use can be made of various methods known to the art. Examples of such methods include blow molding, injection molding, extrusion, compression molding, melt extrusion, film casting and calendering.

The marine biodegradable resin composition of the invention can be employed as a starting material in plastic molded or formed articles, or as various types of additives in articles molded or formed from liquids, paint films, plastic film, boards paper and the like. When employed as a starting material in plastic molded or formed articles, it may be suitably used as a starting material in plastic film, packaging, containers, trays, laminated materials, adhesives, coating materials, health care, textiles such as clothing, and materials for marine applications, such as fishline and fishing nets. When employed as an additive, it can be widely used in, for example, light-scattering agents and optical filter materials, colorants, cosmetics, absorbents, adsorbents, inks, adhesives, electromagnetic shielding materials, fluorescence sensors, biomarkers, recording materials, recording elements, polarizing materials, drug carriers for drug delivery systems (DDS), biosensors, DNA chips, diagnostic agents, thermally porosified moldings and anti-blocking agents; printing ink additives that may be used in screen printing, offset printing, process printing, gravure printing, pad printing, coaters and inkjet printing; ink additives for writing implements such as felt-tip markers, ballpoint pens, fountain pens, brush pens and permanent markers; additives for stationery supplies such as crayons, paints and erasers; coating additives used in, for example, brush coating, spray coating, electrostatic coating, electrodeposition coating, curtain coating, roller coating and dip coating; and additives for paints used in marine applications, particularly marine paint.

EXAMPLES

Synthesis Examples, Examples of the invention and Comparative Examples are given below by way of illustration, although the invention is not limited by these Examples.

In the following Examples and Comparative Examples, the number of equivalents of metal ions was determined by heating and degrading the test substance in nitric acid or aqua regia, and using an ICP-MS system (ICPE-9820, from Shimadzu Corporation) to carry out measurement by emission spectroscopy. The molecular weights of marine biodegradable polymer compounds and polymer compounds were determined as polystyrene-equivalent number-average molecular weights (Mn) by dissolving the target substance in chloroform and carrying out measurement with GPC systems from Shimadzu Corporation (COM-20A, LC-20A, SIL-20A, RID-20A, CTO-20A) using chloroform as the mobile phase and Shodex k-806M columns from Showa Denko K.K.

[1] Synthesis and Evaluation of Marine Biodegradable Linking Agents

[Example 1-1] Synthesis of Marine Biodegradable Linking Agent A1

A one-liter flask was charged with 295 g of succinic acid and 305 g of 1,4-butanediol and the flask contents were heated and stirred at 230°C for 6 hours. The contents were then taken out onto a Teflon® sheet-lined stainless steel tray, giving a solid resin.

Next, 500 g of the resin obtained was crushed and added to a 3 L flask, after which 500 g of acetonitrile, 100 g of succinic anhydride and 125 g of sodium carbonate were added and the flask contents were heated and stirred at 70°C for 4 hours. The reaction mixture was cooled to room temperature and precipitate was removed by filtration. By concentrating the resulting filtrate and further removing solvent under reduced pressure, a polymer compound substituted at one or both ends with COONa was obtained. The number-average molecular weight of the resulting compound, as determined by end group analysis using $^1$H-NMR spectroscopy, was 620.

The polymer compound was then dissolved in a mixed solvent of 500 g of deionized water and 500 g of acetonitrile, after which 320 g of a 20 wt% aqueous solution of calcium chloride was added and the mixture was thoroughly stirred. A white precipitate formed, and so the precipitate was recovered by removing the supernatant and was rinsed with water, following which the remaining solvent was removed under reduced pressure, thereby producing Marine Biodegradable Linking Agent A1 containing ionic bonds on the molecule and having hydroxy groups at both ends. The number-average molecular weight, as measured by GPC, was 1,800 (average number of metal cations, 1.50).

[Example 1-2] Synthesis of Marine Biodegradable Linking Agent A2

A one-liter flask was charged with 152 g of adipic acid, 173 g of terephthalic acid and 275 g of 1,4-butanediol and the flask contents were heated and stirred at 230°C for 6 hours. The contents were then taken out onto a Teflon® sheet-lined stainless steel tray, giving a solid resin.

Next, 500 g of the resin obtained was crushed and added to a 3 L flask, after which 500 g of acetonitrile, 100 g of succinic anhydride and 160 g of potassium carbonate were added and the flask contents were heated and stirred at 70°C for 4 hours. The reaction mixture was cooled to room temperature and precipitate was removed by filtration. By concentrating the resulting filtrate and further removing solvent under reduced pressure, a polymer compound substituted at one or both ends with COOK was obtained. The number-average molecular weight of the resulting compound, as determined by end group analysis using $^1$H-NMR spectroscopy, was 600.

The polymer compound was then dissolved in a mixed solvent of 500 g of deionized water and 500 g of acetonitrile, after which 320 g of a 20 wt% aqueous solution of calcium chloride was added and the mixture was thoroughly stirred. A white precipitate formed, and so the precipitate was recovered by removing the supernatant and was rinsed with water, following which the remaining solvent was removed under reduced pressure, thereby producing Marine Biodegradable Linking Agent A2 containing ionic bonds on the molecule and having hydroxy groups at both ends. The number-average molecular weight, as measured by GPC, was 2,200 (average number of metal cations, 2.06).

[Example 1-3] Synthesis of Marine Biodegradable Linking Agent A3

A three-liter flask was charged with 500 g of Kuraray Polymer P-510 (Kuraray Co., Ltd.; Mn = 500), after which 500 g of acetonitrile, 100 g of succinic anhydride and 125 g of sodium carbonate were added and the flask contents were heated and stirred at 70°C for 4 hours. The reaction mixture was cooled to room temperature and precipitate was removed by filtration. By concentrating the resulting filtrate and further removing solvent under reduced pressure, a polymer compound substituted at one or both ends with COONa was obtained. The number-average molecular weight of the resulting compound, as determined by end group analysis using $^1$H-NMR spectroscopy, was 590.

The polymer compound was then dissolved in a mixed solvent of 500 g of deionized water and 500 g of acetonitrile, after which 280 g of a 20 wt% aqueous solution of magnesium chloride was added and the mixture was thoroughly stirred. A white precipitate formed, and so the precipitate was recovered by removing the supernatant and was rinsed with water, following which the remaining solvent was removed under reduced pressure, thereby producing Marine Biodegradable Linking Agent A3 containing ionic bonds on the molecule and having hydroxy groups at both ends. The number-average molecular weight, as measured by GPC, was 1,600 (average number of metal cations, 1.22).

[Example 1-4] Synthesis of Marine Biodegradable Linking Agent A4

An autoclave having a one-liter capacity was charged with 300 g of succinic acid, 300 g of butanediamine and 180 g of deionized water and was thoroughly flushed with nitrogen, following which the temperature was raised to 270°C under stirring. One hour of additional stirring at 270°C was carried out while keeping the autoclave closed, after which the pressure was released to atmospheric pressure. The contents were then taken out onto a Teflon® sheet-lined stainless steel tray, giving a solid resin.

Next, 500 g of the resin obtained was crushed and added to a three-liter flask, after which 500 g of acetonitrile, 100 g of succinic anhydride and 125 g of sodium carbonate were added and the flask contents were heated and stirred at 70°C for 4 hours. The reaction mixture was cooled to room temperature and precipitate was removed by filtration. By concentrating the resulting filtrate and further removing solvent under reduced pressure, a polymer compound substituted at one or both ends with COONa was obtained. The number-average molecular weight of the resulting compound, as determined by end group analysis using $^1$H-NMR spectroscopy, was 620.

The polymer compound was then dissolved in a mixed solvent of 500 g of deionized water and 500 g of acetonitrile, after which 320 g of a 20 wt% aqueous solution of calcium chloride was added and the mixture was thoroughly stirred. A white precipitate formed, and so the precipitate was recovered by removing the supernatant and was rinsed with water, following which the remaining solvent was removed under reduced pressure, thereby producing Marine Biodegradable Linking Agent A4 containing ionic bonds on the molecule and having amino groups at both ends. The number-average molecular weight, as measured by GPC, was 1,800 (average number of metal cations, 1.50).

[Example 1-5] Synthesis of Marine Biodegradable Linking Agent A5

An autoclave having a one-liter capacity was charged with 250 g of succinic acid, 350 g of hexamethylenediamine and 150 g of deionized water and was thoroughly flushed with nitrogen, following which the temperature was raised to 270°C under stirring. One hour of additional stirring at 270°C was carried out while keeping the autoclave closed, after which the pressure was released to atmospheric pressure. The contents were then taken out onto a Teflon® sheet-lined stainless steel tray, giving a solid resin.

Next, 500 g of the resin obtained was crushed and added to a three-liter flask, after which 500 g of acetonitrile, 100 g of succinic anhydride and 125 g of sodium carbonate were added and the flask contents were heated and stirred at 70°C for 4 hours. The reaction mixture was cooled to room temperature and precipitate was removed by filtration. By concentrating the resulting filtrate and further removing solvent under reduced pressure, a polymer compound substituted at one or both ends with COONa was obtained. The number-average molecular weight of the resulting compound, as determined by end group analysis using $^1$H-NMR spectroscopy, was 600.

The polymer compound was then dissolved in a mixed solvent of 500 g of deionized water and 500 g of acetonitrile, after which 320 g of a 20 wt% aqueous solution of calcium chloride was added and the mixture was thoroughly stirred. A white precipitate formed, and so the precipitate was recovered by removing the supernatant and was rinsed with water, following which the remaining solvent was removed under reduced pressure, thereby producing Marine Biodegradable Linking Agent A5 containing ionic bonds on the molecule and having amino groups at both ends. The number-average molecular weight, as measured by GPC, was 1,700 (average number of metal cations, 1.36).

[Example 1-6] Synthesis of Marine Biodegradable Linking Agent A6

A three-liter flask was charged with 500 g of poly(propylene glycol) bis(2-aminopropyl ether) (from Sigma-Aldrich Co.; Mn = 400), after which 500 g of acetonitrile, 126 g of succinic anhydride and 159 g of sodium carbonate were added and the flask contents were heated and stirred at 70°C for 4 hours. The reaction mixture was cooled to room temperature and precipitate was removed by filtration. By concentrating the resulting filtrate and further removing solvent under reduced pressure, a polymer compound substituted at one or both ends with COONa was obtained. The number-average molecular weight of the resulting compound, as determined by end group analysis using $^1$H-NMR spectroscopy, was 510.

The polymer compound was then dissolved in a mixed solvent of 500 g of deionized water and 500 g of acetonitrile, after which 320 g of a 20 wt% aqueous solution of calcium chloride was added and the mixture was thoroughly stirred. A white precipitate formed, and so the precipitate was recovered by removing the supernatant and was rinsed with water, following which the remaining solvent was removed under reduced pressure, thereby producing Marine Biodegradable Linking Agent A6 containing ionic bonds on the molecule and having amino groups at both ends. The number-average molecular weight, as measured by GPC, was 1,500 (average number of metal cations, 1.42).

[Example 1-7] Synthesis of Marine Biodegradable Linking Agent A7

A three-liter flask was charged with 500 g of PLACCEL 220N (from Daicel Corporation; Mn = 2,000), after which 500 g of acetonitrile, 60 g of succinic anhydride and 70 g of sodium carbonate were added and the flask contents were heated and stirred at 70°C for 4 hours. The reaction mixture was cooled to room temperature and precipitate was removed by filtration. Hydrochloric acid was added to the filtrate and extraction with toluene was carried out. By concentrating the extract-containing toluene and further removing solvent under reduced pressure, a polymer compound end-substituted with COOH was obtained. The number-average molecular weight of the resulting compound, as determined by end group analysis using $^1$H-NMR spectroscopy, was 2,120.

The polymer compound was then dissolved in a mixed solvent of 500 g of deionized water and 500 g of acetonitrile, after which 210 g of a 10 wt% aqueous solution of sodium bicarbonate was added, thereby neutralizing one or both ends. Next, 80 g of a 20 wt% aqueous solution of calcium chloride was added and the mixture was thoroughly stirred. A white precipitate formed, and so the precipitate was recovered by removing the supernatant and was rinsed with water, following which the remaining solvent was removed under reduced pressure, thereby producing Marine Biodegradable Linking Agent A7 containing ionic bonds on the molecule and having carboxyl groups at both ends. The number-average molecular weight, as measured by GPC, was 5,200 (average number of metal cations, 1.36).

[Example 1-8] Synthesis of Marine Biodegradable Linking Agent A8

A one-liter flask was charged with 350 g of adipic acid and 250 g of butanediol and the flask contents were heated and stirred at 230°C for 6 hours. The contents were then taken out onto a Teflon® sheet-lined stainless steel tray, giving a solid resin.

Next, 500 g of the resin obtained was crushed and added to a three-liter flask, after which 500 g of acetonitrile, 110 g of succinic anhydride and 171 g of potassium carbonate were added and the flask contents were heated and stirred at 70°C for 4 hours. The reaction mixture was cooled to room temperature and precipitate was removed by filtration. Hydrochloric acid was added to the filtrate and extraction with toluene was carried out. By concentrating the extract-containing toluene and further removing solvent under reduced pressure, a polymer compound end-substituted with COOH was obtained. The number-average molecular weight of the resulting compound, as determined by end group analysis using $^1$H-NMR spectroscopy, was 1,200.

The polymer compound was then dissolved in a mixed solvent of 500 g of deionized water and 500 g of acetonitrile, after which 475 g of a 10 wt% aqueous solution of potassium bicarbonate was added, thereby neutralizing one or both ends. Next, 130 g of a 20 wt% aqueous solution of calcium chloride was added and the mixture was thoroughly stirred. A white precipitate formed, and so the precipitate was recovered by removing the supernatant and was rinsed with water, following which the remaining solvent was removed under reduced pressure, thereby producing Marine Biodegradable Linking Agent A8 containing ionic bonds on the molecule and having carboxyl groups at both ends. The number-average molecular weight, as measured by GPC, was 2,900 (average number of metal cations, 1.28).

[Example 1-9] Synthesis of Marine Biodegradable Linking Agent A9

An autoclave having a one-liter capacity was charged with 250 g of succinic acid, 350 g of hexamethylenediamine and 150 g of deionized water and was thoroughly flushed with nitrogen, following which the temperature was raised to 270°C under stirring. One hour of additional stirring at 270°C was carried out while keeping the autoclave closed, after which the pressure was released to atmospheric pressure. The contents were then taken out onto a Teflon® sheet-lined stainless steel tray, giving a solid resin.

Next, 500 g of the resin obtained was crushed and added to a three-liter flask, after which 500 g of acetonitrile, 200 g of succinic anhydride and 272 g of potassium carbonate were added and the flask contents were heated and stirred at 70°C for 4 hours. The reaction mixture was cooled to room temperature and precipitate was removed by filtration. Hydrochloric acid was added to the filtrate and extraction with toluene was carried out. By concentrating the extract-containing toluene and further removing solvent under reduced pressure, a polymer compound end-substituted with COOH was obtained. The number-average molecular weight of the resulting compound, as determined by end group analysis using $^1$H-NMR spectroscopy, was 710.

The polymer compound was then dissolved in a mixed solvent of 100 g of deionized water and 500 g of acetonitrile, after which 820 g of a 10 wt% aqueous solution of potassium bicarbonate was added, thereby neutralizing one or both ends. Next, 230 g of a 20 wt% aqueous solution of calcium chloride was added and the mixture was thoroughly stirred. A white precipitate formed, and so the precipitate was recovered by removing the supernatant and was rinsed with water, following which the remaining solvent was removed under reduced pressure, thereby producing Marine Biodegradable Linking Agent A9 containing ionic bonds on the molecule and having carboxyl groups at both ends. The number-average molecular weight, as measured by GPC, was 1,800 (average number of metal cations, 1.22).

[Example 1-10] Synthesis of Marine Biodegradable Linking Agent A10

A one-liter flask was charged with 295 g of succinic acid and 305 g of 1,4-butanediol and the flask contents were heated and stirred at 230°C for 6 hours. The contents were then taken out onto a Teflon® sheet-lined stainless steel tray, giving a solid resin.

Next, 500 g of the resin obtained was crushed and added to a three-liter flask, after which 500 g of acetonitrile, 100 g of succinic anhydride and 125 g of sodium carbonate were added and the flask contents were heated and stirred at 70°C for 4 hours. The reaction mixture was cooled to room temperature and precipitate was removed by filtration. By concentrating the resulting filtrate and further removing solvent under reduced pressure, a polymer compound substituted at one or both ends with COONa was obtained. The number-average molecular weight of the resulting compound, as determined by end group analysis using $^1$H-NMR spectroscopy, was 610.

The polymer compound was then dissolved in a mixed solvent of 500 g of deionized water and 500 g of acetonitrile, after which 370 g of a 30 wt% aqueous solution of aluminum sulfate was added and the mixture was thoroughly stirred. A white precipitate formed, and so the precipitate was recovered by removing the supernatant and was rinsed with water, following which the remaining solvent was removed under reduced pressure, thereby producing Marine Biodegradable Linking Agent A10 containing ionic bonds on the molecule and having hydroxy groups at both ends. The number-average molecular weight, as measured by GPC, was 2,600 (average number of metal cations, 1.10).

[Comparative Example 1-1] Synthesis of Marine Biodegradable Linking Agent B1

A one-liter flask was charged with 319 g of succinic acid and 244 g of 1,4-butanediol and the flask contents were heated and stirred at 230°C for 6 hours. The contents were then taken out onto a Teflon® sheet-lined stainless steel tray, giving a solid resin.

Next, 500 g of the resin obtained was crushed and added to a three-liter flask, after which 500 g of chloroform, 2.5 g of succinic anhydride and 4.0 g of potassium carbonate were added and the flask contents were heated and stirred at 70°C for 24 hours. The reaction mixture was cooled to room temperature and precipitate was removed by filtration. By concentrating the resulting filtrate and further removing solvent under reduced pressure, a polymer compound substituted at one or both ends with COOK was obtained. The number-average molecular weight of the resulting compound, as determined by end group analysis using $^1$H-NMR spectroscopy, was 22,000.

The polymer compound was then melted at 120°C, after which 7.0 g of a 20 wt% aqueous solution of calcium chloride was added, the mixture was thoroughly stirred and the moisture was removed, thereby producing Marine Biodegradable Linking Agent B1 containing ionic bonds on the molecule and having hydroxy groups at both ends. The number-average molecular weight, as measured by GPC, was 42,000 (average number of metal cations, 0.90).

[Comparative Example 1-2] Synthesis of Marine Biodegradable Linking Agent B2

An autoclave having a one-liter capacity was charged with 336 g of adipic acid, 269 g of hexamethylenediamine and 150 g of deionized water and was thoroughly flushed with nitrogen, following which the temperature was raised to 265°C under stirring. One hour of additional stirring at 265°C was carried out while keeping the autoclave closed, after which the pressure was released to atmospheric pressure and the contents were subsequently stirred at 270°C for 2 hours. The contents were then taken out onto a Teflon® sheet-lined stainless steel tray, giving a solid resin.

Next, 500 g of the resin obtained was crushed and added to a 3 L flask, after which 500 g of chloroform, 2.6 g of succinic anhydride and 4.1 g of potassium carbonate were added and the flask contents were heated and stirred at 70°C for 24 hours. The reaction mixture was cooled to room temperature and precipitate was removed by filtration. By concentrating the resulting filtrate and further removing solvent under reduced pressure, a polymer compound substituted at one or both ends with COOK was obtained. The number-average molecular weight of the resulting compound, as determined by end group analysis using $^1$H-NMR spectroscopy, was 24,000.

The polymer compound was then melted at 180°C, after which 7.2 g of a 20 wt% aqueous solution of calcium chloride was added, the mixture was thoroughly stirred and the moisture was removed, thereby producing Marine Biodegradable Linking Agent B2 containing ionic bonds on the molecule and having amino groups at both ends. The number-average molecular weight, as measured by GPC, was 50,000 (average number of metal cations, 1.07).

[Evaluation of Marine Biodegradation]

A seawater biodegradation test was performed by the following method on Marine Biodegradable Linking Agents A1 to A10. The degree of biodegradation relative to cellulose was evaluated using microcrystalline cellulose (Avicel PH-101, from Sigma-Aldrich Co.) as the control material. The results are shown in Table 1.

<Test Method and Conditions>

Method of Measuring Degree of Biodegradation: The oxygen consumption was measured with a closed respirometer (see ASTM D6691)

Test Apparatus: OxiTop IDS (from WTW)

Incubation Temperature: $30 \pm 1$°C, in the dark

$$\text{Degree of Biodegradation (\%):} \quad (BOD_O - BOD_B)/ThOD \times 100$$

$BOD_O$:   Biochemical oxygen demand in test or inoculum activity verification (measured value in mg)
$BOD_B$:   Average biochemical oxygen demand in blank test (measured value in mg)
ThOD:   Theoretical oxygen demand required when test material or control material has completely oxidized (calculated value in mg)

Degree of Biodegradation (%) Relative to Cellulose: (maximum degree of biodegradation of test particles/maximum degree of biodegradation of cellulose) $\times$ 100

Seawater (collected from Tokyo Bay (Port of Chiba in Chiba Prefecture))

Foreign matter was removed from the sampled seawater with a 10 $\mu$m filter, after which the seawater was aerated at room temperature (25°C). The following were added as inorganic nutrients: 0.05 g/L of ammonium chloride and 0.1 g/L of potassium dihydrogen phosphate.

[Table 1]

| | Marine biodegradable linking agent | Degree of biodegradation (%) | | | | | | | | Degree of biodegradation (maximum value) | Degree of degradation relative to cellulose |
|---|---|---|---|---|---|---|---|---|---|---|---|
| | | 7 days | 14 days | 21 days | 28 days | 35 days | 42 days | 49 days | 56 days | | |
| Example 1-1 | A1 | 22 | 35 | 50 | 58 | 62 | 62 | 61 | 62 | 62 | 95 |
| Example 1-2 | A2 | 10 | 21 | 33 | 39 | 40 | 40 | 41 | 40 | 41 | 63 |
| Example 1-3 | A3 | 20 | 41 | 55 | 60 | 61 | 61 | 62 | 63 | 63 | 97 |
| Example 1-4 | A4 | 9 | 23 | 41 | 48 | 50 | 49 | 50 | 50 | 50 | 77 |
| Example 1-5 | A5 | 8 | 20 | 36 | 40 | 42 | 43 | 43 | 44 | 44 | 68 |
| Example 1-6 | A6 | 7 | 17 | 25 | 29 | 31 | 31 | 33 | 34 | 34 | 52 |
| Example 1-7 | A7 | 10 | 28 | 43 | 51 | 53 | 52 | 52 | 52 | 53 | 82 |
| Example 1-8 | A8 | 16 | 39 | 52 | 58 | 60 | 61 | 61 | 61 | 61 | 94 |
| Example 1-9 | A9 | 6 | 19 | 30 | 36 | 38 | 37 | 37 | 38 | 38 | 58 |
| Example 1-10 | A10 | 12 | 36 | 49 | 55 | 56 | 57 | 58 | 57 | 58 | 89 |
| Control material | cellulose | 26 | 40 | 53 | 63 | 64 | 65 | 64 | 63 | 65 | - |

As demonstrated by the results shown in Table 1, the marine biodegradable linking agents of the invention each had a degree of biodegradation relative to cellulose that was 40% or more in incubation periods of up to 56 days.

[2] Synthesis of Marine Biodegradable Polymer Compounds

[Example 2-1] Preparation of Marine Biodegradable Polymer Compound AP1

A 300 mL flask was charged with 100 g of succinic acid, 76.7 g of 1,4-butanediol and 26.5 g of Marine Biodegradable Linking Agent A1. Under a stream of nitrogen gas, the mantle heater temperature was set to 230°C and mixture under heating was carried out for 6 hours with a stirrer. The reaction product within the flask was then taken out onto a Teflon®-lined stainless steel tray and left to cool, giving Marine Biodegradable Polymer Compound AP1.
Marine Biodegradable Polymer Compound AP1 had a number-average molecular weight, as measured by GPC, of 45,000. The number of equivalents of calcium ions, as measured by ICP-MS, was 10.2 eq/$10^5$ g.

[Example 2-2] Preparation of Marine Biodegradable Polymer Compound AP2

A 300 mL flask was charged with 100 g of adipic acid, 72.1 g of 1,4-butanediol and 37.6 g of Marine Biodegradable Linking Agent A2. Under a stream of nitrogen gas, the mantle heater temperature was set to 230°C and mixture under heating was carried out for 6 hours with a stirrer. The reaction product within the flask was then taken out onto a Teflon®-lined stainless steel tray and left to cool, giving Marine Biodegradable Polymer Compound AP2.
Marine Biodegradable Polymer Compound AP2 had a number-average molecular weight, as measured by GPC, of 46,000. The number of equivalents of calcium ions, as measured by ICP-MS, was 10.8 eq/$10^5$ g.

[Example 2-3] Preparation of Marine Biodegradable Polymer Compound AP3

A 300 mL flask was charged with 34.9 g of hexamethylene diisocyanate, 100 g of P-510 (Kuraray Co., Ltd.) and 22.6 g of Marine Biodegradable Linking Agent A3. Under a stream of nitrogen gas, the mantle heater temperature was set to 90°C and mixture under heating was carried out for 60 minutes with a stirrer. The reaction product within the flask was then taken out onto a Teflon®-lined stainless steel tray and left to cool, giving Marine Biodegradable Polymer Compound AP3.
Marine Biodegradable Polymer Compound AP3 had a number-average molecular weight, as measured by GPC, of 52,000. The number of equivalents of magnesium ions, as measured by ICP-MS, was 9.5 eq/$10^5$ g.

[Example 2-4] Preparation of Marine Biodegradable Polymer Compound AP4

An autoclave having a one-liter capacity was charged with 100 g of adipic acid, 76.0 g of hexamethylenediamine, 40 g of deionized water and 83.1 g of Marine Biodegradable Linking Agent A4 and was thoroughly flushed with nitrogen, following which the temperature was raised to 265°C under stirring. One hour of additional stirring at 265°C was carried out while keeping the autoclave closed, after which the pressure was released to atmospheric pressure and the contents were subsequently stirred at 270°C for 2 hours. The contents were then taken out onto a Teflon® sheet-lined stainless steel tray, giving Marine Biodegradable Polymer Compound AP4.
Marine Biodegradable Polymer Compound AP4 had a number-average molecular weight, as measured by GPC, of 62,000. The number of equivalents of magnesium ions, as measured by ICP-MS, was 18.1 eq/$10^5$ g.

[Example 2-5] Preparation of Marine Biodegradable Polymer Compound AP5

An autoclave having a one-liter capacity was charged with 100 g of adipic acid, 80.6 g of hexamethylenediamine, 60 g of deionized water and 67.1 g of Marine Biodegradable Linking Agent A5 and was thoroughly flushed with nitrogen, following which the temperature was raised to 265°C under stirring. One hour of additional stirring at 265°C was carried out while keeping the autoclave closed, after which the pressure was released to atmospheric pressure and the contents were subsequently stirred at 270°C for 2 hours. The contents were then taken out onto a Teflon® sheet-lined stainless steel tray, giving Marine Biodegradable Polymer Compound AP5.
Marine Biodegradable Polymer Compound AP5 had a number-average molecular weight, as measured by GPC, of 57,000. The number of equivalents of calcium ions, as measured by ICP-MS, was 6.1 eq/$10^5$ g.

[Example 2-6] Preparation of Marine Biodegradable Polymer Compound AP6

A 300 mL flask was charged with 100 g of diphenylmethane diisocyanate, 45.7 g of hexamethylenediamine and 24.2 g of Marine Biodegradable Linking Agent A6. Under a stream of nitrogen gas, the mantle heater temperature was set to 90°C and mixture under heating was carried out for 60 minutes with a stirrer. The reaction product within the flask was then taken out onto a Teflon®-lined stainless steel tray and left to cool, giving Marine Biodegradable Polymer Compound AP6.

Marine Biodegradable Polymer Compound AP6 was insoluble in solvent, and so GPC measurement was not carried out. The number of equivalents of calcium ions, as measured by ICP-MS, was 11.1 eq/$10^5$ g.

[Example 2-7] Preparation of Marine Biodegradable Polymer Compound AP7

A 300 mL flask was charged with 100 g of terephthalic acid, 56 g of 1,4-butanediol and 35.1 g of Marine Biodegradable Linking Agent A7. Under a stream of nitrogen gas, the mantle heater temperature was set to 230°C and mixture under heating was carried out for 6 hours with a stirrer. The reaction product within the flask was then taken out onto a Teflon®-lined stainless steel tray and left to cool, giving Marine Biodegradable Polymer Compound AP7.
Marine Biodegradable Polymer Compound AP7 had a number-average molecular weight, as measured by GPC, of 68,000. The number of equivalents of calcium ions, as measured by ICP-MS, was 2.10 eq/$10^5$ g.

[Example 2-8] Preparation of Marine Biodegradable Polymer Compound AP8

A 300 mL flask was charged with 100 g of adipic acid, 61.5 g of 1,4-butanediol and 49.1 g of Marine Biodegradable Linking Agent A8. Under a stream of nitrogen gas, the mantle heater temperature was set to 230°C and mixture under heating was carried out for 6 hours with a stirrer. The reaction product within the flask was then taken out onto a Teflon®-lined stainless steel tray and left to cool, giving Marine Biodegradable Polymer Compound AP8.
Marine Biodegradable Polymer Compound AP8 had a number-average molecular weight, as measured by GPC, of 63,000. The number of equivalents of calcium ions, as measured by ICP-MS, was 9.3 eq/$10^5$ g.

[Example 2-9] Preparation of Marine Biodegradable Polymer Compound AP9

An autoclave having a one-liter capacity was charged with 100 g of adipic acid, 79.1 g of hexamethylenediamine, 60 g of deionized water and 21.8 g of Marine Biodegradable Linking Agent A9 and was thoroughly flushed with nitrogen, following which the temperature was raised to 265°C under stirring. One hour of additional stirring at 265°C was carried out while keeping the autoclave closed, after which the pressure was released to atmospheric pressure and the contents were subsequently stirred at 270°C for 2 hours. The contents were then taken out onto a Teflon® sheet-lined stainless steel tray, giving Marine Biodegradable Polymer Compound AP9.
Marine Biodegradable Polymer Compound AP9 had a number-average molecular weight, as measured by GPC, of 55,000. The number of equivalents of calcium ions, as measured by ICP-MS, was 11.6 eq/$10^5$ g.

[Example 2-10] Preparation of Marine Biodegradable Polymer Compound AP10

A 300 mL flask was charged with 100 g of ε-caprolactam and 4.97 g of Marine Biodegradable Linking Agent A1. Under a stream of nitrogen gas, the mantle heater temperature was set to 230°C and mixture under heating was carried out for 6 hours with a stirrer. The reaction product within the flask was then taken out onto a Teflon®-lined stainless steel tray and left to cool, giving Marine Biodegradable Polymer Compound AP10.
Marine Biodegradable Polymer Compound AP10 had a number-average molecular weight, as measured by GPC, of 25,000. The number of equivalents of calcium ions, as measured by ICP-MS, was 5.2 eq/$10^5$ g.

[Example 2-11] Preparation of Marine Biodegradable Polymer Compound AP11

A 300 mL flask was charged with 100.0 g of succinic acid, 76.2 g of 1,4-butanediol and 32.5 g of Marine Biodegradable Linking Agent A10. Under a stream of nitrogen gas, the mantle heater temperature was set to 230°C and mixture under heating was carried out for 6 hours with a stirrer. The reaction product within the flask was then taken out onto a Teflon®-lined stainless steel tray and left to cool, giving Marine Biodegradable Polymer Compound AP11.
Marine Biodegradable Polymer Compound AP11 was insoluble in solvent and so GPC measurement was not carried out. The number of equivalents of aluminum ions in Marine Biodegradable Polymer Compound AP11, as measured by ICP-MS, was 7.2 eq/$10^5$ g.

[Example 2-12] Preparation of Marine Biodegradable Polymer Compound AP12

A 300 mL flask was charged with 100 g of adipic acid, 13.4 g of 1,2,3-propanetricarboxylic acid, 68.4 g of 1,4-butanediol and 30.6 g of Marine Biodegradable Linking Agent A1. Under a stream of nitrogen gas, the mantle heater temperature was set to 230°C and mixture under heating was carried out for 6 hours with a stirrer. The reaction product within the flask was then taken out onto a Teflon®-lined stainless steel tray and left to cool, giving Marine Biodegradable Polymer Compound AP12.

Marine Biodegradable Polymer Compound AP12 was insoluble in solvent and so GPC measured was not carried out. The number of equivalents of calcium ions in Marine Biodegradable Polymer Co0mpound AP12, as measured by ICP-MS, was 9.6 eq/$10^5$ g.

[Comparative Example 2-1] Preparation of Polymer Compound BP1

A 300 mL flask was charged with 100 g of succinic acid, 63.2 g of 1,4-butanediol and 10.5 g of Marine Biodegradable Linking Agent B1. Under a stream of nitrogen gas, the mantle heater temperature was set to 230°C and mixture under heating was carried out for 6 hours with a stirrer. The reaction product within the flask was then taken out onto a Teflon®-lined stainless steel tray and left to cool, giving Polymer Compound BP1.

Polymer Compound BP1 had a number-average molecular weight, as measured by GPC, of 82,000. The number of equivalents of calcium ions, as measured by ICP-MS, was 0.41 eq/$10^5$ g.

[Comparative Example 2-2] Preparation of Polymer Compound BP2

An autoclave having a one-liter capacity was charged with 100 g of adipic acid, 65.5 g of hexamethylenediamine, 60 g of deionized water and 9.4 g of Marine Biodegradable Linking Agent B2 and was thoroughly flushed with nitrogen, following which the temperature was raised to 265°C under stirring. One hour of additional stirring at 265°C was carried out while keeping the autoclave closed, after which the pressure was released to atmospheric pressure and the contents were subsequently stirred at 270°C for 2 hours. The contents were then taken out onto a Teflon® sheet-lined stainless steel tray, giving Polymer Compound BP2.

Polymer Compound BP2 had a number-average molecular weight, as measured by GPC, of 86,000. The number of equivalents of calcium ions, as measured by ICP-MS, was 0.36 eq/$10^5$ g.

[Comparative Example 2-3] Preparation of Polymer Compound BP3

A 300 mL flask was charged with 100 g of succinic acid and 77.9 g of 1,4-butanediol. Under a stream of nitrogen gas, the mantle heater temperature was set to 230°C and mixture under heating was carried out for 6 hours with a stirrer. The reaction product within the flask was then taken out onto a Teflon®-lined stainless steel tray and left to cool, giving Polymer Compound BP3.

Polymer Compound BP3 had a number-average molecular weight, as measured by GPC, of 79,000.

[Comparative Example 2-4] Preparation of Polymer Compound BP4

An autoclave having a one-liter capacity was charged with 100 g of adipic acid, 81.2 g of hexamethylenediamine and 40 g of deionized water and was thoroughly flushed with nitrogen, following which the temperature was raised to 265°C under stirring. One hour of additional stirring at 265°C was carried out while keeping the autoclave closed, after which the pressure was released to atmospheric pressure and the contents were subsequently stirred at 270°C for 2 hours. The contents were then taken out onto a Teflon® sheet-lined stainless steel tray, giving Polymer Compound BP4.

Polymer Compound BP4 had a number-average molecular weight, as measured by GPC, of 81,000.

[Comparative Example 2-5] Preparation of Polymer Compound BP5

A 300 mL flask was charged with 33.4 g of hexamethylene diisocyanate and 100 g of P-510 (Kuraray Co., Ltd.). Under a stream of nitrogen gas, the mantle heater temperature was set to 90°C and mixture under heating was carried out for 60 minutes with a stirrer. The reaction product within the flask was then taken out onto a Teflon®-lined stainless steel tray and left to cool, giving Polymer Compound BP5.

Polymer Compound BP5 had a number-average molecular weight, as measured by GPC, of 83,000.

[Comparative Example 2-6] Preparation of Polymer Compound BP6

A 300 mL flask was charged with 100 g of ε-caprolactone and 0.81 g of 1,4-butanediol. Under a stream of nitrogen gas, the mantle heater temperature was set to 230°C and mixture under heating was carried out for 6 hours with a stirrer. The reaction product within the flask was then taken out onto a Teflon®-lined stainless steel tray and left to cool, giving Polymer Compound BP6.

Polymer Compound BP6 had a number-average molecular weight, as measured by GPC, of 85,000.

[3] Synthesis of End-Capped Marine Biodegradable Polymer Compounds

[Example 3-1] Preparation of Marine Biodegradable Polymer Compound AP1'

Twenty grams of Marine Biodegradable Polymer Compound AP1 was heated at 180°C and melted under a stream of nitrogen, 0.8 g of phenyl isocyanate was added as an end-capping agent, and the mixture was heated for one hour. The reaction product within the flask was then taken out onto a Teflon®-lined stainless steel tray and left to cool, giving end-capped Polymer Compound AP1'.

[Example 3-2] Preparation of Marine Biodegradable Polymer Compound AP2'

Aside from using 20 grams of Marine Biodegradable Polymer Compound AP2 instead of Marine Biodegradable Polymer Compound AP1 and using 1.0 g of octadodecyl isocyanate instead of phenyl isocyanate as the end-capping agent, end-capped Marine Biodegradable Polymer Compound AP2' was obtained in the same way as in Example 3-1.

[Example 3-3] Preparation of Marine Biodegradable Polymer Compound AP3'

A 100 mL flask was charged with 6.98 g of hexamethylene diisocyanate, 20 g of P-510 (Kuraray Co., Ltd.) and 4.52 g of Marine Biodegradable Linking Agent A3 and, under a stream of nitrogen, the mantle heater temperature was set to 90°C and mixture under heating was carried out for 20 minutes using a stirrer. Next, 0.8 g of cyclohexyl isocyanate was added as an end-capping agent and mixture under heating was carried out for another 40 minutes, following which the reaction product within the flask was taken out onto a Teflon®-lined stainless steel tray and left to cool, giving end-capped Marine Biodegradable Polymer Compound AP3'.

[Example 3-4] Preparation of Marine Biodegradable Polymer Compound AP4'

An autoclave having a one-liter capacity was charged with 20 g of adipic acid, 15.2 g of hexamethylenediamine, 8 g of deionized water and 16.62 g of Marine Biodegradable Linking Agent A4 and was thoroughly flushed with nitrogen, following which the temperature was raised to 265°C under stirring. One hour of additional stirring at 265°C was carried out while keeping the autoclave closed, after which the pressure was released to atmospheric pressure, 0.8 g of benzoyl chloride was added as an end-capping agent, and the contents were stirred at 270°C for 2 hours. The contents were then taken out onto a Teflon® sheet-lined stainless steel tray, giving end-capped Marine Biodegradable Polymer Compound AP4'.

[Example 3-5] Preparation of Marine Biodegradable Polymer Compound AP5'

An autoclave having a one-liter capacity was charged with 20 g of adipic acid, 16.12 g of hexamethylenediamine, 12 g of deionized water and 13.42 g of Marine Biodegradable Linking Agent A4 and was thoroughly flushed with nitrogen, following which the temperature was raised to 265°C under stirring. One hour of additional stirring at 265°C was carried out while keeping the autoclave closed, after which the pressure was released to atmospheric pressure, 0.9 g of myristoyl chloride was added as an end-capping agent, and the contents were stirred at 270°C for 2 hours. The contents were then taken out onto a Teflon® sheet-lined stainless steel tray, giving end-capped Marine Biodegradable Polymer Compound AP5'.

[Example 3-6] Preparation of Marine Biodegradable Polymer Compound AP6'

A 100 mL flask was charged with 20 g of diphenylmethane diisocyanate, 9.14 g of hexamethylenediamine and 4.84 g of Marine Biodegradable Linking Agent A6 and, under a stream of nitrogen, the mantle heater temperature was set to 90°C and mixture under heating was carried out for 20 minutes using a stirrer. Next, 0.1 g of lauroyl chloride was added as an end-capping agent and mixture under heating was carried out for another 40 minutes, following which the reaction product within the flask was taken out onto a Teflon®-lined stainless steel tray and left to cool, giving end-capped Marine Biodegradable Polymer Compound AP6'.

[Example 3-7] Preparation of Marine Biodegradable Polymer Compound AP7'

Aside from using 20 grams of Marine Biodegradable Polymer Compound AP7 instead of Marine Biodegradable Polymer Compound AP1, setting the heating temperature to 210°C and using 1.0 g of octadodecyl isocyanate instead of phenyl isocyanate as the end-capping agent, end-capped Marine Biodegradable Polymer Compound AP7' was obtained in the same way as in Example 3-1.

[Example 3-8] Preparation of Marine Biodegradable Polymer Compound AP8'

Aside from using 20 grams of Marine Biodegradable Polymer Compound AP8 instead of Marine Biodegradable Polymer Compound AP1 and using 0.9 g of octadodecyl isocyanate instead of phenyl isocyanate as the end-capping agent, end-capped Marine Biodegradable Polymer Compound AP8' was obtained in the same way as in Example 3-1.

[Example 3-9] Preparation of Marine Biodegradable Polymer Compound AP9'

An autoclave having a one-liter capacity was charged with 20 g of adipic acid, 15.82 g of hexamethylenediamine, 12 g of deionized water and 4.36 g of Marine Biodegradable Linking Agent A9 and was thoroughly flushed with nitrogen, following which the temperature was raised to 265°C under stirring. One hour of additional stirring at 265°C was carried out while keeping the autoclave closed, after which the pressure was released to atmospheric pressure, 0.8 g of lauroyl chloride was added as an end-capping agent, and the contents were stirred at 270°C for 2 hours. The contents were then taken out onto a Teflon® sheet-lined stainless steel tray, giving end-capped Marine Biodegradable Polymer Compound AP9'.

[Example 3-10] Preparation of Marine Biodegradable Polymer Compound AP10'

Aside from using 20 grams of Marine Biodegradable Polymer Compound AP10 instead of Marine Biodegradable Polymer Compound AP1 and using 0.9 g of dodecyl isocyanate instead of phenyl isocyanate as the end-capping agent, end-capped Marine Biodegradable Polymer Compound AP10' was obtained in the same way as in Example 3-1.

[Example 3-11] Preparation of Marine Biodegradable Polymer Compound AP11'

A 100 mL flask was charged with 20 g of succinic acid, 15.24 g of 1,4-butanediol and 6.5 g of Marine Biodegradable Linking Agent A10 and, under a stream of nitrogen, the mantle heater temperature was set to 230°C and mixture under heating was carried out for 1 hour using a stirrer. Next, 0.2 g of octadodecyl isocyanate was added as an end-capping agent and mixture under heating was carried out for 5 hours, following which the reaction product within the flask was taken out onto a Teflon®-lined stainless steel tray and left to cool, giving end-capped Marine Biodegradable Polymer Compound AP11'.

[Example 3-12] Preparation of Marine Biodegradable Polymer Compound AP12'

A 100 mL flask was charged with 20 g of adipic acid, 2.68 g of 1,2,3-propanetricarboxylic acid, 13.68 g of 1,4-butanediol and 6.12 g of Marine Biodegradable Linking Agent A1 and, under a stream of nitrogen, the mantle heater temperature was set to 230°C and mixture under heating was carried out for 1 hour using a stirrer. Next, 0.1 g of octadodecyl isocyanate was added as an end-capping agent and mixture under heating was carried out for 5 hours, following which the reaction product within the flask was taken out onto a Teflon®-lined stainless steel tray and left to cool, giving end-capped Marine Biodegradable Polymer Compound AP12'.

[Comparative Example 3-1] Preparation of Polymer Compound BP1'

Aside from using 20 grams of Polymer Compound BP1 instead of Marine Biodegradable Polymer Compound AP1, end-capped Polymer Compound BP1' was obtained in the same way as in Example 3-1.

[Comparative Example 3-2] Preparation of Polymer Compound BP2'

An autoclave having a one-liter capacity was charged with 20 g of adipic acid, 13.1 g of hexamethylenediamine, 12 g of deionized water and 1.88 g of Marine Biodegradable Linking Agent B2 and was thoroughly flushed with nitrogen, following which the temperature was raised to 265°C under stirring. One hour of additional stirring at 265°C was carried out while keeping the autoclave closed, after which the pressure was released to atmospheric pressure, 0.8 g of myristoyl chloride was added as an end-capping agent, and the contents were stirred at 270°C for 2 hours. The contents were then taken out onto a Teflon® sheet-lined stainless steel tray, giving end-capped Polymer Compound BP2'.

[Comparative Example 3-3] Preparation of Polymer Compound BP3'

Aside from using 20 grams of Polymer Compound BP3 instead of Marine Biodegradable Polymer Compound AP1 and using 1.0 g of octadodecyl isocyanate instead of phenyl isocyanate as the end-capping agent, end-capped Polymer Compound BP3' was obtained in the same way as in Example 3-1.

[Comparative Example 3-4] Preparation of Polymer Compound BP4'

An autoclave having a one-liter capacity was charged with 20 g of adipic acid, 16.24 g of hexamethylenediamine and 8 g of deionized water and was thoroughly flushed with nitrogen, following which the temperature was raised to 265°C under stirring. One hour of additional stirring at 265°C was carried out while keeping the autoclave closed, following which the pressure was released to atmospheric pressure, 0.9 g of lauroyl chloride was added as an end-capping agent, and the contents were stirred at 270°C for 2 hours. The contents were then taken out onto a Teflon® sheet-lined stainless steel tray, giving end-capped Polymer Compound BP4'.

[Comparative Example 3-5] Preparation of Marine Biodegradable Polymer Compound BP5'

A 100 mL flask was charged with 6.68 g of hexamethylene diisocyanate and 20 g of P-510 (Kuraray Co., Ltd.) and, under a stream of nitrogen, the mantle heater temperature was set to 90°C and mixture under heating was carried out for 20 minutes using a stirrer. Next, 0.9 g of octadodecyl isocyanate was added as an end-capping agent and mixture under heating was carried out for 40 minutes, following which the reaction product within the flask was taken out onto a Teflon®-lined stainless steel tray and allowed to cool, giving end-capped Polymer Compound BP5'.

[Comparative Example 3-6] Preparation of Polymer Compound BP6'

Aside from using 20 grams of Polymer Compound BP6 instead of Marine Biodegradable Polymer Compound AP1 and using 0.8 g of dodecyl isocyanate instead of phenyl isocyanate as the end-capping agent, end-capped Polymer Compound BP6' was obtained in the same way as in Example 3-1.

[4] Measurement of Basic Properties

[Examples 4-1 to 4-24, Comparative Examples 4-1 to 4-12]

The melting temperature, contact angle and tensile strength for Marine Biodegradable Polymer Compounds AP1 to AP12 and AP1' to AP12' and for Polymer Compounds BP1 to BP6 and BP1' to BP6' were measured by the following methods. The results are shown in Tables 2 and 3.

[Measurement of Melting Temperature]

The melting temperature was measured using a differential scanning calorimeter (DSC 6200, from Seiko Instruments Inc.). Specifically, a 10 mg specimen was precisely weighed and the weighed specimen was placed in an aluminum pan. An empty aluminum pan was used the reference. Under normal temperature and humidity, temperature ramp-up was carried out at a rate of 10°C/min over a measurement temperature range of 20°C to 300°C. The glass transition temperature (Tg) was calculated from the resulting reversing heat flow curve. That is, the midpoint of the straight line connecting the points of intersection of tangents to the baseline and to the endothermic curve was determined, and this was treated as Tg. The endothermic (melting) peak point on the resulting curve was computed as the melting temperature.

[Measurement of Contact Angle]

The respective marine biodegradable polymer compounds and polymer compounds were melted at their melting temperatures and press-molded to produce 150 μm thick films. A water droplet was deposited on the resulting film in accordance with JIS R 3257 and the contact angle after 30 seconds was measured using a contact angle meter (Drop Master 300, from Kyowa Interface Science Co., Ltd.).

[Measurement of Tensile Stress]

In accordance with JIS K 7139-A22, dumbbell specimens were fabricated from each film and the tensile stress (yield point) was measured using a universal testing machine (MCT-2150, from A&D Company, Ltd.). Each specimen was measured five times and the average of the measurements was treated as the tensile stress.

[Table 2]

|  | Polymer compound | Melting temperature (°C) | Contact angle (°) | Tensile stress (MPa) |
|---|---|---|---|---|
| Example 4-1 | AP1 | 115 | 72 | 32 |
| Example 4-2 | AP2 | 71 | 70 | 15 |
| Example 4-3 | AP3 | 151 | 88 | 24 |
| Example 4-4 | AP4 | 268 | 61 | 65 |
| Example 4-5 | AP5 | 265 | 60 | 61 |
| Example 4-6 | AP6 | - | 88 | 51 |
| Example 4-7 | AP7 | 209 | 71 | 85 |
| Example 4-8 | AP8 | 60 | 68 | 8 |
| Example 4-9 | AP9 | 261 | 62 | 63 |
| Example 4-10 | AP10 | 65 | 63 | 8 |
| Example 4-11 | AP11 | - | 67 | 37 |
| Example 4-12 | AP12 | - | 68 | 21 |
| Example 4-13 | AP1' | 116 | 74 | 33 |
| Example 4-14 | AP2' | 73 | 71 | 16 |
| Example 4-15 | AP3' | 146 | 91 | 24 |
| Example 4-16 | AP4' | 255 | 62 | 62 |
| Example 4-17 | AP5' | 260 | 63 | 60 |
| Example 4-18 | AP6' | - | 99 | 51 |
| Example 4-19 | AP7' | 212 | 73 | 87 |
| Example 4-20 | AP8' | 72 | 71 | 9 |
| Example 4-21 | AP9' | 249 | 63 | 61 |
| Example 4-22 | AP10' | 71 | 65 | 9 |
| Example 4-23 | AP11' | - | 71 | 36 |
| Example 4-24 | AP12' | - | 73 | 21 |

[Table 3]

|  | Polymer compound | Melting temperature (°C) | Contact angle (°) | Tensile stress (MPa) |
|---|---|---|---|---|
| Comparative Example 4-1 | BP1 | 111 | 70 | 31 |
| Comparative Example 4-2 | BP2 | 266 | 62 | 71 |
| Comparative Example 4-3 | BP3 | 114 | 68 | 34 |
| Comparative Example 4-4 | BP4 | 260 | 61 | 66 |
| Comparative Example 4-5 | BP5 | 160 | 81 | 28 |
| Comparative Example 4-6 | BP6 | 60 | 65 | 10 |
| Comparative Example 4-7 | BP1' | 112 | 73 | 32 |

(continued)

|  | Polymer compound | Melting temperature (°C) | Contact angle (°) | Tensile stress (MPa) |
|---|---|---|---|---|
| Comparative Example 4-8 | BP2' | 255 | 65 | 69 |
| Comparative Example 4-9 | BP3' | 115 | 75 | 35 |
| Comparative Example 4-10 | BP4' | 254 | 64 | 62 |
| Comparative Example 4-11 | BP5' | 161 | 86 | 27 |
| Comparative Example 4-12 | BP6' | 65 | 69 | 10 |

[5] Weight Loss Test with Seawater

[Examples 5-1 to 5-24, Comparative Examples 5-1 to 5-12]

Marine Biodegradable Polymer Compounds AP1 to AP12 and AP1' to AP12' and Polymer Compounds BP1 to BP6 and BP1' to BP6' were press-molded at their respective melting temperatures to produce in each case a 200 μm thick film.

The resulting film was cut into 20 mm squares which were then inserted between layers of stainless steel netting, immersed in seawater (sampled from Tokyo Bay (Port of Chiba in Chiba Prefecture)) that had been placed in a 15 L water tank, and the weight loss over time after 30 days, 60 days and 90 days of immersion was examined.

The results are shown in Tables 4 and 5.

[Table 4]

|  | Particles | Immersion time and weight loss (%) | | |
|---|---|---|---|---|
|  |  | 30 days | 60 days | 90 days |
| Example 5-1 | AP1 | 7 | 20 | 29 |
| Example 5-2 | AP2 | 7 | 25 | 34 |
| Example 5-3 | AP3 | 4 | 11 | 16 |
| Example 5-4 | AP4 | 5 | 16 | 22 |
| Example 5-5 | AP5 | 5 | 14 | 19 |
| Example 5-6 | AP6 | 3 | 8 | 12 |
| Example 5-7 | AP7 | 5 | 15 | 21 |
| Example 5-8 | AP8 | 6 | 18 | 25 |
| Example 5-9 | AP9 | 5 | 15 | 21 |
| Example 5-10 | AP10 | 8 | 24 | 35 |
| Example 5-11 | AP11 | 3 | 10 | 14 |
| Example 5-12 | AP12 | 4 | 13 | 18 |
| Example 5-13 | AP1' | 6 | 17 | 24 |
| Example 5-14 | AP2' | 7 | 20 | 28 |
| Example 5-15 | AP3' | 3 | 10 | 14 |
| Example 5-16 | AP4' | 4 | 12 | 18 |
| Example 5-17 | AP5' | 4 | 11 | 16 |
| Example 5-18 | AP6' | 2 | 7 | 10 |
| Example 5-19 | AP7' | 4 | 14 | 19 |
| Example 5-20 | AP8' | 4 | 14 | 20 |
| Example 5-21 | AP9' | 4 | 12 | 17 |

(continued)

| | Particles | Immersion time and weight loss (%) | | |
|---|---|---|---|---|
| | | 30 days | 60 days | 90 days |
| Example 5-22 | AP10' | 8 | 23 | 31 |
| Example 5-23 | AP11' | 3 | 9 | 12 |
| Example 5-24 | AP12' | 4 | 10 | 15 |

[Table 5]

| | Particles | Immersion time and weight loss (%) | | |
|---|---|---|---|---|
| | | 30 days | 60 days | 90 days |
| Comparative Example 5-1 | BP1 | 1 | 2 | 3 |
| Comparative Example 5-2 | BP2 | 0 | 1 | 2 |
| Comparative Example 5-3 | BP3 | 0 | 1 | 1 |
| Comparative Example 5-4 | BP4 | 0 | 0 | 0 |
| Comparative Example 5-5 | BP5 | 0 | 1 | 2 |
| Comparative Example 5-6 | BP6 | 1 | 3 | 5 |
| Comparative Example 5-7 | BP1' | 1 | 2 | 3 |
| Comparative Example 5-8 | BP2' | 0 | 1 | 2 |
| Comparative Example 5-9 | BP3' | 0 | 1 | 1 |
| Comparative Example 5-10 | BP4' | 0 | 0 | 0 |
| Comparative Example 5-11 | BP5' | 0 | 1 | 2 |
| Comparative Example 5-12 | BP6' | 1 | 3 | 4 |

From the results shown in Tables 4 and 5, it appears that, concurrent with disintegration by seawater, biodegradability is accelerated owing to the presence of microorganisms in the seawater.

[6] Preparation of Marine Biodegradable Resin Compositions and Confirmation Test 1 in Seawater (Weight Loss)

[Examples 6-1 to 6-12, Comparative Examples 6-1 to 6-7]

Marine Biodegradable Polymer Compounds AP1 to AP12 and Polymer Compounds BP1 to BP6 that had been crushed using a crusher (Wonder Blender WB-1, from Osaka Chemical Co., Ltd.) and classified with a stainless steel screen (openings, 26 $\mu$m) were kneaded at 140°C with the biodegradable resin PBSA (FD-92, from Mitsubishi Chemical Corporation) to a concentration of 20 wt%, and the kneaded material was press-molded at 150°C to produce in each case a 200 $\mu$m thick film (Examples 6-1 to 6-12, Comparative Examples 6-1 to 6-6). In addition, PBSA alone (containing no particles) was press-molded at 150°C to produce a 150 $\mu$m thick film (Comparative Example 6-7).
The contact angle measurement results for the films thus produced are shown in Table 6. The contact angles were measured by the method described above in "[4] Measurement of Basic Properties."
The resulting films were cut into 10 mm squares, which were each placed in 200 mL of deionized water or 200 mL of seawater (collected from Tokyo Bay (Port of Chiba in Chiba Prefecture)) and left at rest for 7 days or 30 days at 25°C. The film was then taken out and the film surface and appearance were examined with a scanning electron microscope. The results are shown in Table 6.

[Table 6]

| | Polymer compound | Deionized water | | Seawater | | Contact angle (°C) |
|---|---|---|---|---|---|---|
| | | 7 days | 30 days | 7 days | 30 days | |
| Example 6-1 | AP1 | unchanged | unchanged | surface changed | surface became uneven | 68 |
| Example 6-2 | AP2 | unchanged | unchanged | surface changed | surface became uneven | 66 |
| Example 6-3 | AP3 | unchanged | unchanged | surface changed | surface became uneven | 66 |
| Example 6-4 | AP4 | unchanged | unchanged | surface changed | surface became uneven | 62 |
| Example 6-5 | AP5 | unchanged | unchanged | surface changed | surface became uneven | 63 |
| Example 6-6 | AP6 | unchanged | unchanged | surface changed | surface became uneven | 71 |
| Example 6-7 | AP7 | unchanged | unchanged | surface changed | surface became uneven | 65 |
| Example 6-8 | AP8 | unchanged | unchanged | surface changed | surface became uneven | 64 |
| Example 6-9 | AP9 | unchanged | unchanged | surface changed | surface became uneven | 63 |
| Example 6-10 | AP10 | unchanged | unchanged | surface changed | surface became uneven | 65 |
| Example 6-11 | AP11 | unchanged | unchanged | surface changed | surface became uneven | 68 |
| Example 6-12 | AP12 | unchanged | unchanged | surface changed | surface became uneven | 69 |
| Comparative Example 6-1 | BP1 | unchanged | unchanged | unchanged | unchanged | 65 |
| Comparative Example 6-2 | BP2 | unchanged | unchanged | unchanged | unchanged | 64 |
| Comparative Example 6-3 | BP3 | unchanged | unchanged | unchanged | unchanged | 68 |
| Comparative Example 6-4 | BP4 | unchanged | unchanged | unchanged | unchanged | 62 |
| Comparative Example 6-5 | BP5 | unchanged | unchanged | unchanged | unchanged | 68 |
| Comparative Example 6-6 | BP6 | unchanged | unchanged | unchanged | unchanged | 64 |
| Comparative Example 6-7 | BPSA | unchanged | unchanged | unchanged | unchanged | 67 |

From the results shown in Table 6, it appears that, concurrent with disintegration by seawater, biodegradability is accelerated owing to the presence of microorganisms in the seawater.

[7] Preparation of Marine Biodegradable Resin Compositions and Confirmation Test 2 in Seawater (Weight Loss)

[Examples 7-1 to 7-12, Comparative Examples 7-1 to 7-7]

Marine Biodegradable Polymer Compounds AP1' to AP12' and Polymer Compounds BP1' to BP6' that had been crushed using a crusher (Wonder Blender WB-1, from Osaka Chemical Co., Ltd.) and classified with a stainless steel screen (openings, 26 μm) were kneaded at 140°C with the biodegradable resin Mater-Bi EF05B (a starch-based resin from Novamont S.p.A) to a concentration of 20 wt%, and the kneaded material was press-molded at 150°C to produce in each case a 200 μm thick film (Examples 7-1 to 7-12, Comparative Examples 7-1 to 7-6). In addition, the starch-based resin alone (containing no particles) was press-molded at 150°C to produce a 150 μm thick film (Comparative Example 7-7).

The contact angle measurement results for the produced films are shown in Table 7. The contact angles were measured by the method described above in "[4] Measurement of Basic Properties."

The resulting films were cut into 10 mm squares, which were each placed in 200 mL of deionized water or 200 mL of seawater (collected from Tokyo Bay (Port of Chiba in Chiba Prefecture)) and left at rest for 7 days or 30 days at 25°C. The film was then taken out and the film surface and appearance were examined with a scanning electron microscope. The results are shown in Table 7.

[Table 7]

| | Polymer compound | Deionized water | | Seawater | | Contact angle (°C) |
|---|---|---|---|---|---|---|
| | | 7 days | 30 days | 7 days | 30 days | |
| Example 7-1 | AP1' | unchanged | unchanged | surface changed | surface became uneven | 68 |
| Example 7-2 | AP2' | unchanged | unchanged | surface changed | surface became uneven | 67 |
| Example 7-3 | AP3' | unchanged | unchanged | surface changed | surface became uneven | 69 |
| Example 7-4 | AP4' | unchanged | unchanged | surface changed | surface became uneven | 62 |
| Example 7-5 | AP5' | unchanged | unchanged | surface changed | surface became uneven | 63 |
| Example 7-6 | AP6' | unchanged | unchanged | surface changed | surface became uneven | 69 |
| Example 7-7 | AP7' | unchanged | unchanged | surface changed | surface became uneven | 65 |
| Example 7-8 | AP8' | unchanged | unchanged | surface changed | surface became uneven | 64 |
| Example 7-9 | AP9' | unchanged | unchanged | surface changed | surface became uneven | 65 |
| Example 7-10 | AP10' | unchanged | unchanged | surface changed | surface became uneven | 63 |
| Example 7-11 | AP11' | unchanged | unchanged | surface changed | surface became uneven | 67 |
| Example 7-12 | AP12' | unchanged | unchanged | surface changed | surface became uneven | 68 |
| Comparative Example 7-1 | BP1' | unchanged | unchanged | unchanged | unchanged | 65 |
| Comparative Example 7-2 | BP2' | unchanged | unchanged | unchanged | unchanged | 66 |
| Comparative Example 7-3 | BP3' | unchanged | unchanged | unchanged | unchanged | 64 |

(continued)

| | Polymer compound | Deionized water | | Seawater | | Contact angle (°C) |
|---|---|---|---|---|---|---|
| | | 7 days | 30 days | 7 days | 30 days | |
| Comparative Example 7-4 | BP4' | unchanged | unchanged | unchanged | unchanged | 61 |
| Comparative Example 7-5 | BP5' | unchanged | unchanged | unchanged | unchanged | 63 |
| Comparative Example 7-6 | BP6' | unchanged | unchanged | unchanged | unchanged | 62 |
| Comparative Example 7-7 | Mater-Bi | unchanged | unchanged | unchanged | unchanged | 63 |

From the results shown in Table 7, it appears that, concurrent with disintegration by seawater, biodegradability is accelerated owing to the presence of microorganisms in the seawater.

**Claims**

1. A marine biodegradable polymer compound which comprises as essential units:

   (A) a structural unit A derived from a marine biodegradable linking agent which is a compound that includes on the molecule two or more reactive groups X and has, on a main chain, a structure which includes two or more organic anions having molecular weights of from 100 to 10,000 and in which the organic anions are bound by ionic bonds with a metal cation having a valence of two or more, and
   (B1) a structural unit B1 derived from a compound having on the molecule two or more reactive groups Y that react with the reactive groups X or (B2) a structural unit B2 derived from a ring-opening polymerizable cyclic compound in which reactive groups Y that react with the reactive groups X form on the molecule due to ring opening;

   and which, when comprising structural unit B1, additionally comprises:
   (C) a structural unit C derived from a compound, other than the marine biodegradable linking agent, which includes on the molecule two or more reactive groups X.

2. The marine biodegradable polymer compound of claim 1, wherein the organic anions are of at least one type selected from the group consisting of the carboxylate anion ($-COO^-$), sulfonate anion ($-SO_3^-$), sulfate anion ($-O-SO_3^-$) and phosphate anion ($-P(=O)(OH)-O^-$).

3. The marine biodegradable polymer compound of claim 1, wherein the organic anions have repeating units containing at least one bond selected from the group consisting of ether, ester, amide and carbonate bonds.

4. The marine biodegradable polymer compound of claim 1, wherein the metal cation having a valence of two or more is a calcium ion, beryllium ion, magnesium ion, strontium ion, barium ion, zinc ion, aluminum ion, iron ion, copper ion, platinum ion, gold ion, titanium ion, nickel ion, cobalt ion, manganese ion, zirconium ion, ruthenium ion, rhodium ion, palladium ion, scandium ion, gallium ion, indium ion or radium ion.

5. The marine biodegradable polymer compound of claim 1, wherein the number of equivalents of metal ions having a valence of two or more on the molecule is on average from 1 to 100 eq/$10^5$ g.

6. The marine biodegradable polymer compound of claim 1, wherein the marine biodegradable linking agent (A) has a melting temperature of 180°C or below.

7. The marine biodegradable polymer compound of claim 1, wherein the average number of metal cations included per molecule of the marine biodegradable linking agent (A) is larger than 1.

8. The marine biodegradable polymer compound of claim 1, wherein the marine biodegradable linking agent (A) has a degree of degradation relative to cellulose that is 40% or more.

9. The marine biodegradable polymer compound of claim 1, wherein reactive groups X and reactive groups Y are each independently hydroxy groups, amino groups, isocyanate groups or carboxyl groups.

10. The marine biodegradable polymer compound of claim 1, wherein structural units A and structural units C are included in a molar ratio therebetween (A:C) of from 0.1:99.9 to 90:10.

11. The marine biodegradable polymer compound of claim 1, wherein the compound is a polyester, polyurethane, polyamide or polyurea.

12. The marine biodegradable polymer compound of claim 1, wherein one or more of the marine biodegradable linking agent (A), compound (B1) and compound (C) has a functionality of three or more.

13. The marine biodegradable polymer compound of claim 1, wherein the compound is end-capped.

14. An additive consisting of the marine biodegradable polymer compound of any one of claims 1 to 13.

15. A marine biodegradable resin composition comprising the marine biodegradable polymer compound of any one of claims 1 to 13.

16. The marine biodegradable resin composition of claim 15, further comprising a biodegradable resin.

17. The marine biodegradable resin composition of claim 16, wherein the content of the marine biodegradable polymer compound is from 1 to 99 wt% and the content of the biodegradable resin is from 1 to 99 wt%.

18. A formed body obtained from the marine biodegradable resin composition of claim 15.

19. A method for preparing a marine biodegradable polymer compound, which method comprises the step of polymerizing (A) a marine biodegradable linking agent which is a compound that includes on the molecule two or more reactive groups X and has, on a main chain, a structure which includes two or more organic anions having molecular weights of from 100 to 10,000 and in which the organic anions are bound by ionic bonds with a metal cation having a valence of two or more, (B1) a compound having on the molecule two or more reactive groups Y that react with the reactive groups X and (C) a compound, other than the marine biodegradable linking agent, which includes on the molecule two or more reactive groups X; or the step of polymerizing (A) a marine biodegradable linking agent which is a compound that includes on the molecule two or more reactive groups X and has, on a main chain, a structure which includes two or more organic anions having molecular weights of from 100 to 10,000 and in which the organic anions are bound by ionic bonds with a metal cation having a valence of two or more and (B2) a ring-opening polymerizable cyclic compound in which reactive groups Y that react with the reactive groups X form on the molecule due to ring opening.

20. The method for preparing a marine biodegradable polymer compound of claim 19, wherein the polymerization is polycondensation.

21. The method for preparing a marine biodegradable polymer compound of claim 19, further comprising the step of, prior to polymerization, mixing together the marine biodegradable linking agent (A), compound (B1) and compound (C1), or the marine biodegradable linking agent (A) and compound (B2).

22. The method for preparing a marine biodegradable polymer compound of claim 19, wherein the ratio in which the marine biodegradable linking agent (A) is used relative to compound (C), expressed as the molar ratio (A):(C), is from 0.1:99.9 to 90:10.

23. The method for preparing a marine biodegradable polymer compound of any one of claims 19 to 22, wherein the marine biodegradable linking agent (A) has a melting temperature of 180°C or below and polymerization is carried out by melting the marine biodegradable linking agent (A), compound (B1) and compound (C) or by melting the marine biodegradable linking agent (A) and compound (B2).

24. A compound having, on a main chain, a structure which includes two or more organic anions having molecular weights of from 100 to 10,000 and in which the organic anions are bound by ionic bonds with a metal cation having a valence of two or more, and including on the molecule two or more amino groups, carboxyl groups, thiol groups, vinyl groups or isocyanate groups.

# EP 4 631 996 A1

## INTERNATIONAL SEARCH REPORT

| | International application No. |
|---|---|
| | **PCT/JP2023/039851** |

### A. CLASSIFICATION OF SUBJECT MATTER

***C08G 79/14***(2006.01)i; ***C08G 18/40***(2006.01)i; ***C08G 63/00***(2006.01)i; ***C08G 69/26***(2006.01)i; ***C08L 101/16***(2006.01)i
FI: C08G79/14; C08G63/00; C08L101/16; C08G69/26; C08G18/40

According to International Patent Classification (IPC) or to both national classification and IPC

### B. FIELDS SEARCHED

Minimum documentation searched (classification system followed by classification symbols)

C08G79/14; C08G18/40; C08G63/00; C08G69/26; C08L101/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2000-281805 A (DAICEL CHEM. IND., LTD.) 10 October 2000 (2000-10-10) | 24 |
| | claims, examples | |
| A | entire text | 1-23 |
| A | JP 2021-191810 A (NISSHINBO HOLDINGS INC.) 16 December 2021 (2021-12-16) | 1-24 |
| | entire text | |
| A | JP 6966601 B1 (DAICEL CORP.) 17 November 2021 (2021-11-17) | 1-24 |
| | entire text | |
| A | JP 7-76632 A (DAICEL CHEM. IND., LTD.) 20 March 1995 (1995-03-20) | 1-24 |
| | entire text | |
| A | JP 2004-277748 A (TOYOBO CO., LTD.) 07 October 2004 (2004-10-07) | 1-24 |
| | entire text | |
| A | JP 8-176501 A (TOYOBO CO., LTD.) 09 July 1996 (1996-07-09) | 1-24 |
| | entire text | |

☑ Further documents are listed in the continuation of Box C.　　☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **26 December 2023** | **09 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2023/039851** |

**C. DOCUMENTS CONSIDERED TO BE RELEVANT**

| Category* | Citation of document, with indication, where appropriate, of the relevant passages | Relevant to claim No. |
| --- | --- | --- |
| A | JP 2001-146570 A (TOYOBO CO., LTD.) 29 May 2001 (2001-05-29)<br>entire text | 1-24 |
| A | JP 2004-18680 A (NEC CORP.) 22 January 2004 (2004-01-22)<br>entire text | 1-24 |

Form PCT/ISA/210 (second sheet) (January 2015)

## INTERNATIONAL SEARCH REPORT
### Information on patent family members

| International application No. |
| --- |
| **PCT/JP2023/039851** |

| Patent document cited in search report | | | Publication date (day/month/year) | Patent family member(s) | | | Publication date (day/month/year) |
| --- | --- | --- | --- | --- | --- | --- | --- |
| JP | 2000-281805 | A | 10 October 2000 | (Family: none) | | | |
| JP | 2021-191810 | A | 16 December 2021 | EP | 4163318 | A1 | |
| | | | | claims, examples | | | |
| | | | | CN | 115698186 | A | |
| | | | | WO | 2021/246103 | A1 | |
| JP | 6966601 | B1 | 17 November 2021 | US | 2023/0201085 | A1 | |
| | | | | entire text | | | |
| | | | | WO | 2021/251458 | A1 | |
| | | | | EP | 4166130 | A1 | |
| JP | 7-76632 | A | 20 March 1995 | US | 5478386 | A | |
| | | | | entire text | | | |
| | | | | EP | 597478 | A1 | |
| | | | | DE | 69316836 | C | |
| | | | | CA | 2102927 | A1 | |
| | | | | PH | 30463 | A | |
| | | | | KR | 10-1994-0011541 | A | |
| | | | | CN | 1088595 | A | |
| | | | | TW | 256845 | B | |
| JP | 2004-277748 | A | 07 October 2004 | (Family: none) | | | |
| JP | 8-176501 | A | 09 July 1996 | (Family: none) | | | |
| JP | 2001-146570 | A | 29 May 2001 | US | 6395866 | B1 | |
| | | | | entire text | | | |
| | | | | EP | 1072625 | A2 | |
| | | | | NO | 327258 | B | |
| | | | | KR | 10-2001-0015443 | A | |
| | | | | CN | 1281868 | A | |
| | | | | NO | 20003800 | D0 | |
| JP | 2004-18680 | A | 22 January 2004 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5212233 B
- JP H571056 B
- JP 2004027148 A

**Non-patent literature cited in the description**

- **TAKADA, H.** Current status of microplastics contamination --International trends and countermeasures. *Haikibutsu Shigen Junkan Gakkaishi*, 2018, vol. 29 (4), 261-269
- **EBISUI, A. et al.** Degradation of biodegradable plastics in seawater. *Suisan Kogaku*, 2003, vol. 40 (2), 143-149
- *Sen'i to Kogyo*, 1984, vol. 40 (4.5), 259-261
- Nettowaku Porima Ronbunshu. *Journal of Network Polymers*, 2018, vol. 39 (1), 10-19